# EUROPEAN PATENT APPLICATION

(11) **EP 4 510 702 A1**
(43) Date of publication of application: **19.02.2025**
(21) Application number: 23814829.0
(22) Date of filing: 23.04.2023
(51) Int. Cl.: H04W 36/00

(54) **DUAL-CARD COMMUNICATION METHOD AND TERMINAL DEVICE**

(30) Priority: 30.05.2022 CN 202210603383; 28.06.2022 CN 202210742421
(71) Applicant: Honor Device Co., Ltd., Shenzhen, Guangdong 518040 (CN)
(72) Inventor: SHEN, Li, Shenzhen, Guangdong 518040 (CN)
(74) Representative: Goddar, Heinz J.
(86) International application number: PCT/CN2023/090159
(87) International publication number: WO 2023/231643

(57) **Abstract**

Embodiments of this application provide a dual-card communication method and a terminal device. The method includes: when dual cards are both in a connected state for a cell handover, and when it is determined that a DSDA mode supported by a terminal device can be formed between a neighboring cell frequency band of a first card and a neighboring cell frequency band of a second card, determining a first candidate frequency band meeting a preset condition from an initial candidate frequency band of each card with which the DSDA mode can be formed; determining a target DSDA combination including a target frequency band of each card from DSDA combinations formed based on the first candidate frequency band of each card, so that the terminal device switches the first card and the second card to the corresponding target frequency bands respectively. According to the method, it can be preferentially ensured that a DSDA mode continues to be formed between frequency bands on which dual cards camp after a cell handover to keep a connected state, thereby avoiding affecting the normal execution of a service on each card. In addition, the quality of the frequency bands on which the dual cards camp after the cell handover is better than the quality of frequency bands on which the dual cards previously camp, so that the signal quality is improved, thereby effectively improving user experience.

## Description

This application claims priority to Chinese Patent Application No. 202210603383.6, filed with the China National Intellectual Property Administration on May 30, 2022 and entitled "DUAL-CARD COMMUNICATION METHOD AND TERMINAL DEVICE", and priority to Chinese Patent Application No. 202210742421.6, filed with the China National Intellectual Property Administration on June 28, 2022 and entitled "DUAL-CARD COMMUNICATION METHOD AND TERMINAL DEVICE", which are incorporated herein by reference in their entireties.

### TECHNICAL FIELD

This application relates to the field of communication, and specifically to a dual-card communication method and a terminal device in the field of communication.

### BACKGROUND

With the development of communication, most current terminal devices (for example, mobile phones) support a dual sim dual standby (dual sim dual standby, DSDS) or dual sim dual active (dual sin dual active, DSDA) mode. In the DSDA mode, a terminal device supports service concurrency of dual cards, i.e., the dual cards can implement simultaneous sending or reception. When one card performs a call service, the other card can receive an incoming call or can perform a data service (i.e., Internet surfing). In the DSDS mode, the terminal device does not support service concurrency of the dual cards. When one card performs a call service, the other card cannot perform a data service, and when one card performs a data service, the other card can receive an incoming call but the incoming call interrupts the data service. For a primary card, a call service of a secondary card prevents the primary card from performing a data service. In addition, the secondary card occupies an antenna due to behavior such as network selection, measurement, tracking area update (tracking area update, TAU), SMS, MMS, and periodic registration, affecting Internet surfing experience on the primary card. As can be learned, compared with the DSDS mode, the DSDA mode provides better user experience.

When the dual cards of the terminal device are both in a connected state, the DSDA mode is formed between the dual cards, and uplink transmission and downlink transmission can be performed on both the dual cards. However, after at least one card of the dual cards has performed a cell handover, if only the DSDS mode can be formed between frequency bands of cells on which the dual cards eventually camp but the DSDA mode cannot, uplink transmission of any card of the dual cards is definitely affected, resulting in a service interruption of the any card. In this case, the cell handover is a failure, severely affecting user experience.

### SUMMARY

Embodiments of this application provide a dual-card communication method and a terminal device. When dual cards are both in a connected state for a cell handover, it is ensured as much as possible to form a DSDA mode between frequency bands of cells on which the dual cards eventually camp after the cell handover to continue to keep the dual cards in a connected state, to ensure the normal execution of a service on each card, thereby improving user experience.

According to a first aspect, a dual-card communication method is provided, applied to a terminal device. A first card and a second card of the terminal device are both in a connected state. The method includes: determining whether a dual sim dual active DSDA mode supported by the terminal device can be formed between a neighboring cell frequency band of the first card and a neighboring cell frequency band of the second card; measuring an initial candidate frequency band of each card of the first card and the second card between which the DSDA mode can be formed; determining a first candidate frequency band meeting a preset condition in the initial candidate frequency band of each card, where the preset condition includes: quality of a neighboring cell of each card meets an event configured for a cell handover, and one neighboring cell corresponds to one frequency band; determining a target DSDA combination based on at least one DSDA combination based on a DSDA mode formed between the first candidate frequency band of the first card and the first candidate frequency band of the second card, where the target DSDA combination includes a target frequency band in the first candidate frequency band of the first card and a target frequency band in the first candidate frequency band of the second card; and reporting a measurement report, where the measurement report is configured for indicating quality of the target frequency band of the first card and quality of the target frequency band of the second card.

In the dual-card communication method provided in the embodiments of this application, when the first card and the second card are both in a connected state, the DSDA mode is formed between the first card and the second card. When a cell handover needs to be performed, it is first determined whether a DSDA mode supported by the terminal device can be formed between the neighboring cell frequency band of the first card and the neighboring cell frequency band of the second card, and subsequent steps continue to be performed when the DSDA mode can be formed, to preferentially ensure that the DSDA mode can still be formed between frequency bands of cells on which the first card and the second card camp after the cell handover. Subsequently, the initial candidate frequency band of each card for which a DSDA mode can be formed is measured, a first candidate frequency band meeting the preset condition (i.e., a quality requirement) is determined from the initial candidate frequency band of each card, the target DSDA combination including the target frequency band of each card is determined from the first candidate frequency bands of the first card and the second card, and the measurement report is reported to a network device, so that the network device indicates the terminal device to switch the first card and the second card to the corresponding target frequency bands respectively, thereby further ensuring the quality of the frequency bands of the cells on which the first card and the second card camp after the cell handover. In summary, according to the method, the DSDA mode can continue to be formed between the frequency bands on which the first card and the second card camp after the cell handover to keep a connected state, thereby avoiding affecting the normal execution of a service on each card. In addition, the quality of the frequency bands on which the first card and the second card camp after the cell handover is better than the quality of frequency bands on which the first card and the second card previously camp, so that the signal quality is improved, thereby effectively improving user experience in general.

Optionally, the at least one DSDA combination includes a plurality of DSDA combinations; and the determining a target DSDA combination based on at least one DSDA combination based on a DSDA mode formed between the first candidate frequency band of the first card and the first candidate frequency band of the second card includes:
determining a DSDA combination with the highest priority of the at least one DSDA combination as the target DSDA combination.

In the dual-card communication method provided in the embodiments of this application, the terminal device uses the DSDA combination with the highest priority as the target DSDA combination, so that the DSDA mode formed between the frequency bands on which the first card and the second card camp after the cell handover can be an optimal mode set on the terminal device, thereby improving the performance of a dual-card mode and providing good user experience.

Optionally, the target DSDA combination is a combination with the best dual-card mode capability of the plurality of DSDA combinations.

In the dual-card communication method provided in the embodiments of this application, the terminal device determines the combination with the best dual-card mode capability of the plurality of DSDA combinations as the target DSDA combination, so that the DSDA mode formed between the frequency bands on which the first card and the second card camp after the cell handover can be a dual-card mode with the best performance, and providing the best user experience.

Optionally, the method further includes:
when a DSDA mode supported by the terminal device cannot be formed between a neighboring cell frequency band of the first card and a neighboring cell frequency band of the second card, skipping measuring the neighboring cell frequency band of each card.

In the dual-card communication method provided in the embodiments of this application, when a DSDA mode supported by the terminal device cannot be formed between the neighboring cell frequency band of the first card and the neighboring cell frequency band of the second card, the neighboring cell frequency band of each card is not measured. In this way, the first card and the second card can still camp on current cells and do not perform a cell handover, to continue to keep the DSDA mode of the dual cards, so that it can be ensured that the first card and the second card continue to remain in a connected state, thereby avoiding affecting the normal execution of a service to some extent, and ensuring good user experience as much as possible. In addition, the terminal device does not measure the neighboring cell frequency band of each card, so that a waste of power caused by ineffective measurement can be further avoided, thereby reducing power consumption.

Optionally, before the determining whether a dual sim dual active DSDA mode supported by the terminal device can be formed between a neighboring cell frequency band of the first card and a neighboring cell frequency band of the second card, the method further includes:
determining that a priority of a service currently performed by the first card is the same as a priority of a service currently performed by the second card.

In the dual-card communication method provided in the embodiments of this application, if the priorities of the services currently performed by the first card and the second card are different, for example, one card performs a call service, the other card performs a data service, and a priority of the call service is higher than a priority of the data service, if it is to preferentially consider whether the DSDA mode can be formed between the frequency bands of the cells on which the first card and the second card camp after the cell handover and then consider a quality requirement, for the card performing a call service, the quality of the eventually determined target frequency band may not rank at the top among the quality of all neighboring cell frequency bands. Therefore, the performance of the card performing a call service may fail to reach the optimum, affecting user experience to some extent. Therefore, when the priority of the service currently performed by the first card is the same as the priority of the service currently performed by the second card, it is first determined whether the DSDA mode can be formed between the frequency bands of the cells on which the first card and the second card camp after the cell handover and then the quality requirement is considered, so that a case that a priority of a service currently performed by a card is high but the quality of a frequency band on which the card camps after a cell handover is not good can be avoided, thereby avoiding affecting user experience to some extent.

Optionally, the services currently performed by the first card and the second card are both data services.

According to a second aspect, a dual-card communication method is provided, applied to a terminal device. Dual cards of the terminal device are both in a connected state. The method includes: when priorities of services currently performed by the dual cards are different, determining a first target frequency band meeting a first preset condition in a neighboring cell frequency band of a first card of the dual cards, where the priority of the service currently performed by the first card is higher than the priority of the service currently performed by a second card of the dual cards, and the first preset condition includes: quality of a neighboring cell of the first card meets an event configured for a cell handover, and one neighboring cell corresponds to one frequency band; determining an initial candidate frequency band that is in a neighboring cell frequency band of the second card and between which and the first target frequency band a dual sim dual active DSDA mode supported by the terminal device can be formed; determining a first candidate frequency band meeting a second preset condition in the initial candidate frequency band of the second card, where the second preset condition includes: quality of a neighboring cell of the second card meets an event configured for a cell handover, and one neighboring cell corresponds to one frequency band; and reporting a measurement report, where the measurement report is configured for indicating quality of the first target frequency band and quality of a second target frequency band determined based on the first candidate frequency band.

In the dual-card communication method provided in the embodiments of this application, when the dual cards are both in a connected state, and when the priorities of the services currently performed by the dual cards are different, the terminal device first determines a first target frequency band meeting a first preset condition (a quality requirement) from the neighboring cell frequency band of the first card with a high service priority to preferentially ensure the quality of the first card with a high service priority, next, determines an initial candidate frequency band between which and the first target frequency band a DSDA mode can be formed from the neighboring cell frequency band of the second card with a low service priority, determines a first candidate frequency band meeting a second preset condition (a quality requirement) from the initial candidate frequency band, determines the second target frequency band from the first candidate frequency band, and reports the measurement report to a network device, so that the network device indicates the terminal device to switch the first card and the second card to the corresponding target frequency bands respectively, thereby further ensuring that a DSDA mode can still be formed between frequency bands on which the dual cards camp after a cell handover to keep a connected state, and improving user experience in general. In summary, according to the method, the quality of the first card with the high service priority is preferentially ensured, and a DSDA mode can continue to be formed between the frequency bands on which the dual cards camp after the cell handover to keep a connected state, thereby avoiding affecting the normal execution of a service on each card. In addition, the quality of the frequency bands on which the dual cards camp after the cell handover is better than the quality of frequency bands on which the dual cards previously camp, so that the signal quality is improved, thereby better improving user experience in general.

Optionally, the first candidate frequency band includes a plurality of frequency bands; and before the reporting a measurement report, the method further includes:
determining a frequency band with the highest priority in the first candidate frequency band as the second target frequency band.

In the dual-card communication method provided in the embodiments of this application, the terminal device determines the frequency band with the highest priority in the first candidate frequency band as the second target frequency band, so that after the terminal device performs a cell handover on the dual cards, the DSDA mode formed between the first target frequency band and the second target frequency band on which the dual cards camp respectively can be an optimal mode set on the terminal device, thereby improving the performance of a dual-card mode.

Optionally, a DSDA combination of a DSDA mode formed between the second target frequency band and the first target frequency band is a combination with the best dual-card capability of DSDA combinations formed between frequency bands in the first candidate frequency band and the first target frequency band.

In the dual-card communication method provided in the embodiments of this application, the terminal device determines a frequency band included in the first candidate frequency band in the combination with the best dual-card capability of the DSDA combinations formed between the frequency bands in the first candidate frequency band and the first target frequency band as the second target frequency band, so that after the terminal device performs a cell handover on the dual cards, the DSDA mode formed between the first target frequency band and the second target frequency band on which the dual cards camp respectively can be a dual-card mode with the optimal performance, thereby providing the best user experience.

Optionally, the service currently performed by the first card is a call service, and the service currently performed by the second card is a data service; or the service currently performed by the first card is a call service performed in a foreground, and the service currently performed by the second card is a call service performed in a background.

According to a third aspect, a terminal device is provided. The terminal device is configured to perform the method according to the foregoing first aspect or second aspect. Specifically, the terminal device may include modules configured to perform any possible implementation in the foregoing first aspect or second aspect.

According to a fourth aspect, a terminal device is provided, including a processor. The processor is coupled to a memory, and may be configured to execute instructions in the memory, to implement the method in any possible implementation in the foregoing first aspect or second aspect. Optionally, the terminal device further includes the memory. Optionally, the apparatus further includes a communication interface, and the processor is coupled to the communication interface.

According to a fifth aspect, a computer-readable storage medium is provided, storing a computer program. The computer program, when being executed by an apparatus, causes the apparatus to implement the method in any possible implementation in the foregoing first aspect or second aspect.

According to a sixth aspect, a computer program product including instructions is provided. The instructions, when being executed by a computer, cause an apparatus to implement the method in any possible implementation in the foregoing first aspect or second aspect.

According to a seventh aspect, a chip is provided, including: an input interface, an output interface, a processor, and a memory. The input interface, the output interface, the processor, and the memory are connected through an internal connection path. The processor is configured to execute code in the memory. When the code is executed, the processor is configured to perform the method in any possible implementation in the foregoing first aspect or second aspect.

### BRIEF DESCRIPTION OF DRAWINGS

FIG. 1 is a schematic structural diagram of a mobile communication system according to an embodiment of this application;
FIG. 2 is a schematic structural diagram of a terminal device according to an embodiment of this application;
FIG. 3 is a schematic flowchart of a dual-card communication method according to an embodiment of this application;
FIG. 4 is another schematic flowchart of a dual-card communication method according to an embodiment of this application;
FIG. 5 is another schematic flowchart of a dual-card communication method according to an embodiment of this application;
FIG. 6 is another schematic flowchart of a dual-card communication method according to an embodiment of this application;
FIG. 7 is another schematic flowchart of a dual-card communication method according to an embodiment of this application;
FIG. 8 is a schematic block diagram of a terminal device according to an embodiment of this application; and
FIG. 9 is a schematic structural diagram of a terminal device according to an embodiment of this application.

### DESCRIPTION OF EMBODIMENTS

The following describes technical solutions of this application with reference to the accompanying drawings.

The technical solutions in the embodiments of this application are applicable to a terminal device that can communicate with a network device and supports dual-card communication. Each card can support a call service and a data service (i.e., an Internet service). For example, the terminal device may be a mobile phone, a smart watch, a smart band, a tablet computer, or the like. A specific type of the terminal device is not limited in the embodiments of this application.

The technical solutions in the embodiments of this application may be applied to various communication systems, for example, a global system for mobile communications (global system for mobile communications, GSM), a general packet radio service (general packet radio service, GPRS) system, a code division multiple access (code division multiple access, CDMA) system, a wideband code division multiple access (wideband code division multiple access, WCDMA) system, time-division code division multiple access (time-division code division multiple access, TD-SCDMA), a long term evolution (long term evolution, LTE) system, an LTE frequency division duplex (frequency division duplex, FDD) system, LTE time division duplex (time division duplex, TDD), a fifth generation new radio (5th generation new radio, 5G NR) or future sixth generation (6th generation, 6G) system, or the like. 5G NR is referred to as NR for short.

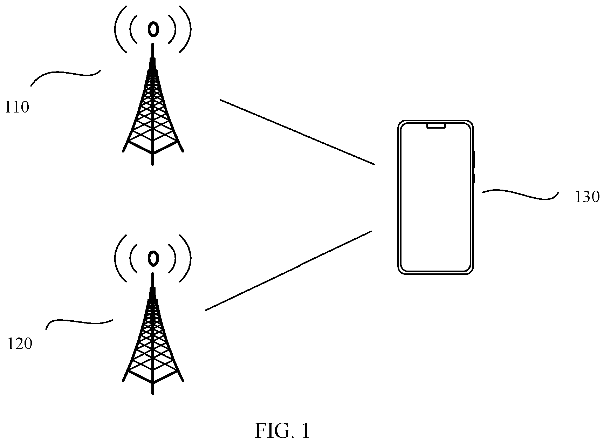

The embodiments of this application are applicable to a mobile communication system including a plurality of base stations and at least one terminal device. The plurality of base stations include at least a base station that can support a 5G network and a base station that can support a 4G network. For example, as shown in FIG. 1, the mobile communication system includes a base station 110, a base station 120, and a terminal device 130. One of the base station 110 and the base station 120 can support a 4G network, the other can support a 5G network, and the terminal device 130 can be connected to at least one of the base station 110 and the base station 120. For ease of description, the base station that supports a 4G network is referred to as a 4G base station for short, and the base station that supports a 5G network is referred to as a 5G base station for short.

If the terminal device 130 is connected to one of the base station 110 and the base station 120, dual cards both camp on a same network (4G network or 5G network). If the terminal device 130 is connected to both the base station 110 and the base station 120, three following cases may exist. Case 1: The terminal device supports dual connectivity of a 4G network and a 5G network, and each card of the two cards is in a dual-connectivity state, i.e., each card is connected to both the 4G network and the 5G network. Case 2: One card camps on a 4G network, and the other card camps on a 5G network. Case 3: The terminal device supports dual connectivity of an LTE network and a 5G network. One card camps on a 4G network or a 5G network, and the other card is connected to both the 4G network and the 5G network.

It should be noted that, because dual cards do not necessarily support a same operator, when the dual cards both camp on a 4G network or a 5G network, the dual cards may camp on different 4G base stations or 5G base stations. Therefore, the mobile communication system may include a plurality of base stations 110 and/or a plurality of base stations 120. When a base station (for example, a base station 110 or a base station 120) is a base station of a shared network, even if the dual cards do not support a same operator, the system still allows the dual cards to camp on a network supported by the base station. The shared network is a network shared by different operators.

It is assumed that dual cards support different operators, a card 1 supports an operator 1, a card 2 supports an operator 2, and a mobile communication system includes one base station 110 and two base stations 120.

In an example, if the base station 110 is a 4G base station of a shared 4G network and the base stations 120 are 5G base stations of a non-shared 5G network, one base station 120 supports the operator 1, and the other base station 120 supports the operator 2. If the dual cards both camp on the 4G network, the dual cards both camp on a same base station 110 (i.e., the 4G base station). If the dual cards both camp on the 5G network, the dual cards camp on different base stations 120 (i.e., the 5G base stations). The card 1 camps on a base station 120 corresponding to the operator 1, and the card 2 camps on a base station 120 corresponding to the operator 2.

In another example, if the base station 110 is a 5G base station of a shared 5G network and the base station 120 is a 4G base station of a non-shared 4G network, one base station 120 supports the operator 1, and the other base station 120 supports the operator 2. If the dual cards both camp on the 5G network, the dual cards both camp on a same base station 110 (i.e., the 5G base station). If the dual cards both camp on the 4G network, the dual cards camp on different base stations 120 (i.e., the 4G base stations). The card 1 camps on a base station 120 corresponding to the operator 1, and the card 2 camps on a base station 120 corresponding to the operator 2.

It is alternatively assumed that dual cards support different operators, a card 1 supports an operator 1, a card 2 supports an operator 2, and a mobile communication system includes two base stations 110 and two base stations 120. The base stations 110 are 4G base stations of a non-shared 4G network, one base station 110 supports the operator 1, and the other base station 110 supports the operator 2. The base stations 120 are 5G base stations of a non-shared 5G network, one base station 120 supports the operator 1, and the other base station 120 supports the operator 2. If the dual cards both camp on the 4G network, the dual cards camp on different base stations 110 (i.e., the 4G base stations). The card 1 camps on a base station 110 corresponding to the operator 1, and the card 2 camps on a base station 110 corresponding to the operator 2. If the dual cards both camp on the 5G network, the dual cards camp on different base stations 120 (i.e., the 5G base stations). The card 1 camps on a base station 120 corresponding to the operator 1, and the card 2 camps on a base station 120 corresponding to the operator 2.

It should be understood that the mobile communication system shown in FIG. 1 is only a schematic description and should not constitute a limitation to the embodiments of this application. For example, the mobile communication system may further include a core network device, more base stations and terminal devices, and the like.

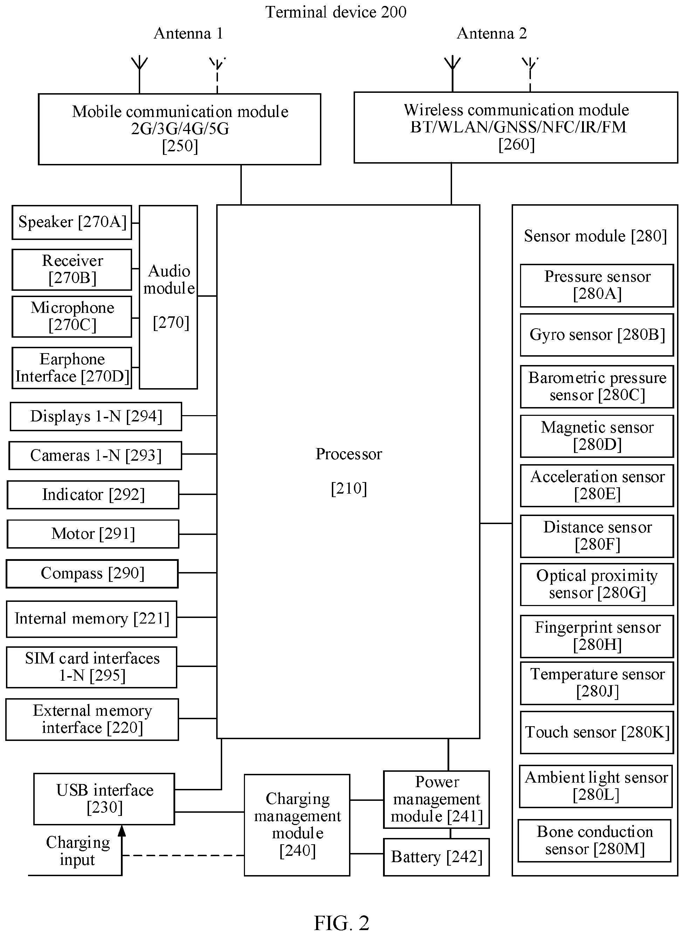

FIG. 2 is a schematic structural diagram of a terminal device 200. The terminal device 200 may be the terminal device 130 in FIG. 1. The terminal device 200 may include a processor 210, an external memory interface 220, an internal memory 221, a universal serial bus (universal serial bus, USB) interface 230, a charging management module 240, a power management module 241, a battery 242, an antenna 1, an antenna 2, a mobile communication module 250, a wireless communication module 260, and an audio module 270, a speaker 270A, a receiver 270B, a microphone 270C, a headset jack 270D, a sensor module 280, a button 290, a motor 291, an indicator 292, a camera 293, a display 294, a subscriber identity module (subscriber identification module, SIM) card interface 295, and the like. The sensor module 280 may include a pressure sensor 280A, a gyro sensor 280B, a barometric pressure sensor 280C, a magnetic sensor 280D, an acceleration sensor 280E, a distance sensor 280F, an optical proximity sensor 280G, a fingerprint sensor 280H, a temperature sensor 280J, a touch sensor 280K, an ambient light sensor 280L, a bone conduction sensor 280M, and the like.

It may be understood that an example structure in this embodiment of this application does not constitute a specific limitation on the terminal device 200. In some other embodiments of this application, the terminal device 200 may include more or fewer components than those shown in the figure, or combine some components, or split some components, or have different component arrangements. The components in the portrait may be implemented by hardware, software, or a combination of software and hardware.

The processor 210 may include one or more processing units. For example, the processor 210 may include an application processor (application processor, AP), a modem processor, a graphics processing unit (graphics processing unit, GPU), an image signal processor (image signal processor, ISP), a controller, a memory, a video codec, a digital signal processor (digital signal processor, DSP), a baseband processor, a neural-network processing unit (neural-network processing unit, NPU), and/or the like. Different processing units may be independent components, or may be integrated into one or more processors.

The controller may be a nerve center and a command center of the terminal device 200. The controller may generate an operation control signal according to instruction operation code and a time-sequence signal, and control obtaining and execution of instructions.

A memory may be further arranged in the processor 210, to store instructions and data. In some embodiments, the memory in the processor 210 is a cache. The memory may store instructions or data recently used or cyclically used by the processor 210. If needing to use the instructions or the data again, the processor 210 may directly invoke the instructions or the data from the memory, which avoids repeated access and reduces a waiting time of the processor 210, thereby improving system efficiency.

In some embodiments, the processor 210 may include one or more interfaces. The interface may include an inter-integrated circuit (inter-integrated circuit, I2C) interface, an inter-integrated circuit sound (inter-integrated circuit sound, I2S) interface, a pulse code modulation (pulse code modulation, PCM) interface, a universal asynchronous receiver/transmitter (universal asynchronous receiver/transmitter, UART) interface, a mobile industry processor interface (mobile industry processor interface, MIPI), a general-purpose input/output (general-purpose input/output, GPIO) interface, a subscriber identity module (subscriber identity module, SIM) interface, a universal serial bus (universal serial bus, USB) interface, and/or the like.

The I2C interface is a bidirectional synchronous serial bus and includes a serial data line (serial data line, SDA) and a serial clock line (serial clock line, SCL). In some embodiments, the processor 210 may include a plurality of I2C buses. The processor 210 may be coupled to the touch sensor 280K, a charger, a flash, the camera 293, and the like through different I2C bus interfaces respectively. For example, the processor 210 may be coupled to the touch sensor 280K through the I2C interface, so that the processor 210 communicates with the touch sensor 280K by using the I2C bus interface, to implement a touch function of the terminal device 200.

The I2S interface may be configured to perform audio communication. In some embodiments, the processor 210 may include a plurality of I2S buses. The processor 210 may be coupled to the audio module 270 through the I2S bus to implement communication between the processor 210 and the audio module 270. In some embodiments, the audio module 270 may transfer an audio signal to the wireless communication module 260 through the I2S interface, to implement a function of answering a call by using a Bluetooth headset.

The PCM interface may also be used for audio communication, and samples, quantizes, and encodes an analog signal. In some embodiments, the audio module 270 may be coupled to the wireless communication module 260 through a PCM bus interface. In some embodiments, the audio module 270 may alternatively transfer an audio signal to the wireless communication module 260 through the PCM interface, to implement a function of answering a call by using a Bluetooth headset. Both the I2S interface and the PCM interface may be configured to perform audio communication.

The UART interface is a universal serial data bus used for asynchronous communication. The bus may be a two-way communication bus. The bus converts data to be transmitted between serial communication and parallel communication. In some embodiments, the UART interface is usually configured to connect the processor 210 to the wireless communication module 260. For example, the processor 210 communicates with a Bluetooth module in the wireless communication module 260 through the UART interface, to implement a Bluetooth function. In some embodiments, the audio module 270 may transfer an audio signal to the wireless communication module 260 through the UART interface, to implement a function of playing music by using a Bluetooth headset.

The MIPI interface may be configured to connect the processor 210 to a peripheral device such as the display 294 or the camera 293. The MIPI interface includes a camera serial interface (camera serial interface, CSI), a display serial interface (display serial interface, DSI), and the like. In some embodiments, the processor 210 communicates with the camera 293 through the CSI interface, to implement a photographing function of the terminal device 200. The processor 210 communicates with the display 294 through the DSI interface, to implement a display function of the terminal device 200.

The GPIO interface may be configured through software. The GPIO interface may be configured as a control signal, or may be configured as a data signal. In some embodiments, the GPIO interface may be configured to connect the processor 210 to the camera 293, the display 294, the wireless communication module 260, the audio module 270, the sensor module 280, and the like. The GPIO interface may alternatively be configured as an I2C interface, an I2S interface, a UART interface, a MIPI interface, or the like.

The USB interface 230 is an interface that complies with the USB standard specification, and may be specifically a Mini USB interface, a Micro USB interface, a USB Type C interface, and the like. The USB interface 230 may be configured to connect to the charger to charge the terminal device 200, or may be used for data transmission between the terminal device 200 and a peripheral device, or may be configured to be connected to a headset, to play audio through the headset. The interface may alternatively be configured to be connected to another terminal device such as an AR device.

It may be understood that an interface connection relationship between the modules illustrated in this embodiment of this application is merely an example for description, and does not constitute a limitation on a structure of the terminal device 200. In some other embodiments of this application, the terminal device 200 may alternatively use an interface connection manner different from that in the foregoing embodiment, or use a combination of a plurality of interface connection manners.

The charging management module 240 is configured to receive a charging input from the charger. The charger may be a wireless charger, or may be a wired charger. In some embodiments of wired charging, the charging management module 240 may receive a charging input of a wired charger through the USB interface 230. In some embodiments of wireless charging, the charging management module 240 may receive a wireless charging input through a wireless charging coil of the terminal device 200. While charging the battery 242, the charging management module 240 may further supply power to the terminal device through the power management module 241.

The power management module 241 is configured to be connected to the battery 242, the charging management module 240, and the processor 210. The power management module 241 receives an input from the battery 242 and/or the charging management module 240, to supply power to the processor 210, the internal memory 221, an external memory, the display 294, the camera 293, the wireless communication module 260, and the like. The power management module 241 may also be configured to monitor parameters such as a battery capacity, a quantity of battery cycles, and a battery health status (power leakage and impedance). In some other embodiments, the power management module 241 may alternatively be disposed in the processor 210. In some other embodiments, the power management module 241 and the charging management module 240 may alternatively be disposed in a same device.

A wireless communication function of the terminal device 200 may be implemented by using the antenna 1, the antenna 2, the mobile communication module 250, the wireless communication module 260, the modem processor, the baseband processor, and the like.

The antenna 1 and the antenna 2 are configured to transmit and receive electromagnetic wave signals. Each antenna in the terminal device 200 may be configured to cover a single communication frequency band or a plurality of communication frequency bands. Different antennas may be multiplexed to improve antenna utilization. For example, the antenna 1 may be multiplexed as a diversity antenna of a wireless local area network. In some other embodiments, the antennas may be used with a tuning switch.

The mobile communication module 250 can provide a solution for wireless communication including 2G/3G/4G/5G and the like to be applied to the terminal device 200. The mobile communication module 250 may include at least one filter, a switch, a power amplifier, a low noise amplifier (low noise amplifier, LNA), and the like. The mobile communication module 250 may receive an electromagnetic wave through the antenna 1, perform processing such as filtering and amplification on the received electromagnetic wave, and send the electromagnetic wave to the modem processor for demodulation. The mobile communication module 250 may further amplify a signal modulated by the modem processor, and convert the signal into an electromagnetic wave through the antenna 1 for radiation. In some embodiments, at least some functional modules of the mobile communication module 250 may be disposed in the processor 210. In some embodiments, at least some functional modules of the mobile communication module 250 and at least some modules of the processor 210 may be disposed in a same component.

The modem processor may include a modulator and a demodulator. The modulator is configured to modulate a to-be-sent low-frequency baseband signal into a middle/high-frequency signal. The demodulator is configured to demodulate the received electromagnetic wave signal into a low-frequency baseband signal. Then the demodulator transfers the low-frequency baseband signal obtained through demodulation to the baseband processor for processing. The low-frequency baseband signal is processed by the baseband processor and is then transferred to the application processor. The application processor outputs a sound signal through an audio device (which is not limited to the speaker 270A, the receiver 270B, and the like), or displays an image or a video through the display 294. In some embodiments, the modem processor may be an independent component. In some other embodiments, the modem processor may be independent of the processor 210, and the modem processor and the mobile communication module 250 or another functional module may be arranged in a same component.

The wireless communication module 260 may provide a solution to wireless communication applied to the terminal device 200, for example, a wireless local area network (wireless local area networks, WLAN) (for example, a wireless fidelity (wireless fidelity, Wi-Fi) network), Bluetooth (bluetooth, BT), a global navigation satellite system (global navigation satellite system, GNSS), frequency modulation (frequency modulation, FM), near field communication (near field communication, NFC), and an infrared (infrared, IR) technology. The wireless communication module 260 may be one or more devices that integrate at least one communication processing module. The wireless communication module 260 receives an electromagnetic wave through the antenna 2, performs frequency modulation and filtering processing on the electromagnetic wave signal, and sends the processed signal to the processor 210. The wireless communication module 260 may further receive a to-be-sent signal from the processor 210, perform frequency modulation and amplification on the to-be-sent signal, and convert the to-be-sent signal into an electromagnetic wave for radiation through the antenna 2.

In some embodiments, in the terminal device 200, the antenna 1 is coupled to the mobile communication module 250, and the antenna 2 is coupled to the wireless communication module 260, so that the terminal device 200 can communicate with a network and another device by using a wireless communication technology. The wireless communication technology may specifically include a global system for mobile communications (global system for mobile communications, GSM), a general packet radio service (general packet radio service, GPRS), code division multiple access (code division multiple access, CDMA), wideband code division multiple access (wideband code division multiple access, WCDMA), time-division code division multiple access (time-division code division multiple access, TD-SCDMA), long term evolution (long term evolution, LTE), BT, a GNSS, a WLAN, NFC, FM, an IR technology, and/or the like. The GNSS may include a global positioning system (global positioning system, GPS), a global navigation satellite system (global navigation satellite system, GLONASS), a Beidou navigation satellite system (Beidou navigation satellite system, BDS), a quasi-zenith satellite system (quasi-zenith satellite system, QZSS), and/or a satellite based augmentation system (satellite based augmentation systems, SBAS).

The terminal device 200 implements a display function by using the GPU, the display 294, the application processor, and the like. The GPU is a microprocessor for image processing and is connected to the display 294 and the application processor. The GPU is configured to perform mathematical and geometric calculations, and is configured to render graphics. The processor 210 may include one or more GPUs that execute program instructions to generate or change display information.

The display 294 is configured to display an image, a video, or the like. The display 294 may include a display panel. The display panel may be a liquid crystal display (liquid crystal display, LCD), an organic light-emitting diode (organic light-emitting diode, OLED), an active-matrix organic light-emitting diode (active-matrix organic light emitting diode, AMOLED), a flexible light-emitting diode (flex light-emitting diode, FLED), a Miniled, a MicroLed, a Micro-oLed, a quantum dot light-emitting diode (quantum dot light emitting diodes, QLED), or the like. In some embodiments, the terminal device 200 may include one or N displays 294, where N is a positive integer greater than 1.

The terminal device 200 can implement a photographing function by using the ISP, the camera 293, the video codec, the GPU, the display 294, the application processor, and the like.

The ISP is configured to process data fed back by the camera 293. For example, during photographing, a shutter is enabled. Light is transmitted to a photosensitive element of the camera through a lens, and an optical signal is converted into an electrical signal. The photosensitive element of the camera transmits the electrical signal to the ISP for processing, and the electrical signal is converted into an image visible to a naked eye. The ISP may further optimize an algorithm for noise, brightness, and complexion. The ISP may alternatively optimize parameters such as exposure and a color temperature of a photographing scenario. In some embodiments, the ISP may be disposed in the camera 293.

The camera 293 is configured to capture a still image or a video. An optical image is generated for an object by using the lens and is projected onto the photosensitive element. The photosensitive element may be a charge-coupled device (charge coupled device, CCD) or a complementary metal-oxide-semiconductor (complementary metal-oxide-semiconductor, CMOS) phototransistor. The photosensitive element converts an optical signal into an electrical signal, and then transfers the electrical signal to the ISP, to convert the electrical signal into a digital image signal. The ISP outputs the digital image signal to the DSP for processing. The DSP converts the digital image signal into a standard image signal in an RGB format, a YUV format, or the like. In some embodiments, the terminal device 200 may include one or N cameras 293, where N is a positive integer greater than 1.

The digital signal processor is configured to process a digital signal, and in addition to a digital image signal, the digital signal processor may further process another digital signal. For example, when the terminal device 200 performs frequency channel selection, the digital signal processor is configured to perform Fourier transformation and the like on frequency channel energy.

The video codec is configured to compress or decompress a digital video. The terminal device 200 can support one or more video codecs. In this way, the terminal device 200 may play or record videos of a plurality of encoding formats, for example, a moving picture experts group (moving picture experts group, MPEG)1, MPEG2, MPEG3, MPEG4, and the like.

An NPU is a neural-network (neural-network, NN) computing processor. By using the structure of a biological neural network, for example, a transmission mode between neurons of a human brain, the NPU can process input information quickly and learn by itself continuously. Applications such as intelligent cognition of the terminal device 200, such as image recognition, facial recognition, speech recognition, and text understanding, can be implemented by using the NPU.

The external memory interface 220 may be configured to connect an external storage card, for example, a micro SD card, thereby extending a storage capability of the terminal device 200. The external storage card communicates with the processor 210 through the external memory interface 220, so as to implement a data storage function, for example, store files such as music and a video into the external storage card.

The internal memory 221 may be configured to store computer-executable program code. The executable program code includes instructions. The processor 210 runs the instructions stored in the internal memory 221, to implement various functional applications and data processing of the terminal device 200. The internal memory 221 may include a program storage area and a data storage area. The program storage area may store an operating system, an application required by at least one function (such as a sound playback function and an image display function), and the like. The data storage area may store data (for example, audio data, a phone book, or the like) created during use of the terminal device 200. In addition, the internal memory 221 may include a high-speed random access memory, and may further include a non-volatile memory, for example, at least one magnetic disk storage device, a flash memory device, or a universal flash storage (universal flash storage, UFS).

The terminal device 200 can implement an audio function, for example, music playback and recording, by using the audio module 270, the speaker 270A, the receiver 270B, the microphone 270C, the headset jack 270D, the application processor, and the like, such as music playback, recording, and the like.

The audio module 270 is configured to convert digital audio information into an analog audio signal output, and is also configured to convert an analog audio input into a digital audio signal. The audio module 270 may further be configured to encode and decode audio signals. In some embodiments, the audio module 270 may be disposed in the processor 210, or some functional modules in the audio module 270 are disposed in the processor 210.

The speaker 270A, also referred to as a "horn", is configured to convert an audio electrical signal into a sound signal. Music can be listened to or a hands-free call can be answered by using the speaker 270A in the terminal device 200.

The receiver 270B, also referred to as a "handset", is configured to convert an audio electrical signal into a sound signal. When a call is answered or audio information is listened to by using the terminal device 200, the receiver 270B may be put close to a human ear to listen to a voice.

The microphone 270C, also referred to as a "mic" and a "mike", is configured to convert a sound signal into an electrical signal. When making a call or sending voice information, a user may make a sound near the microphone 270C through the mouth of the user, to input a sound signal into the microphone 270C. At least one microphone 270C may be disposed in the terminal device 200. In some other embodiments, two microphones 270C may be disposed in the terminal device 200, to collect a sound signal and further implement a noise reduction function. In some other embodiments, alternatively, three, four, or more microphones 270C may be disposed in the terminal device 200, to collect a sound signal, reduce noise, and further identify a sound source, implement a directional recording function, and the like.

The headset jack 270D is configured to be connected to a wired headset. The headset jack 270D may be the USB interface 230, or may be a 3.5 mm open mobile terminal platform (open mobile terminal platform, OMTP) standard interface, or a cellular telecommunications industry association of the USA (cellular telecommunications industry association of the USA, CTIA) standard interface.

The pressure sensor 280A is configured to sense a pressure signal, and can convert the pressure signal into an electrical signal. In some embodiments, the pressure sensor 280A may be disposed in the display 294. There are many types of pressure sensors 280A, for example, a resistive pressure sensor, an inductive pressure sensor, and a capacitive pressure sensor. The capacitive pressure sensor may include at least two parallel plates made of a conductive material. When a force is applied to the pressure sensor 280A, capacitance between electrodes changes. The terminal device 200 determines intensity of the pressure based on the change in the capacitance. In a case that a touch operation acts on the display 294, the terminal device 200 measures the intensity of the touch operation by using the pressure sensor 280A. The terminal device 200 may also calculate a touch position based on a detection signal of the pressure sensor 280A. In some embodiments, touch operations that are performed at a same touch position but have different strength of the touch operations may correspond to different operation instructions. For example, when a touch operation whose touch operation strength is less than a first pressure threshold is performed on a short message application icon, an instruction of checking a short message is executed. When a touch operation whose touch operation strength is greater than or equal to the first pressure threshold is performed on the short message application icon, an instruction of creating a new short message is executed.

The gyro sensor 280B may be configured to determine a moving posture of the terminal device 200. In some embodiments, angular velocities of the terminal device 200 around three axes (that is, x, y, and z axes) may be determined by the gyro sensor 280B. The gyro sensor 280B may be used for image stabilization in photography. For example, when the shutter is pressed, the gyro sensor 280B detects an angle at which the terminal device 200 jitters, calculates, based on the angle, a distance for which a lens module needs to compensate, and allows the lens to cancel the jitter of the terminal device 200 through reverse motion, to implement image stabilization. The gyro sensor 280B may also be used for navigation and a motion sensing game scene.

The barometric pressure sensor 280C is configured to measure barometric pressure. In some embodiments, the terminal device 200 calculates an altitude by using a barometric pressure value measured by the barometric pressure sensor 280C, to assist in positioning and navigation.

The magnetic sensor 280D includes a Hall sensor. The terminal device 200 may detect opening and closing of a flip leather case by using the magnetic sensor 280D. In some embodiments, when the terminal device 200 is a clamshell phone, the terminal device 200 may detect opening and closing of a flip cover based on the magnetic sensor 280D, further set features such as automatic unlocking of the flip cover according to the detected opening and closing state of the holster or opening and closing state of the flip cover.

The acceleration sensor 280E may detect magnitude of accelerations in various directions (generally on three axes) of the terminal device 200, may detect magnitude and a direction of the gravity when the terminal device 200 is static, and may be further configured to identify a posture of the terminal device, and is applied to applications such as landscape and portrait orientation switching and a pedometer.

The distance sensor 280F is configured to measure a distance. The terminal device 200 may measure the distance by using infrared or laser. In some embodiments, in a photographing scene, the terminal device 200 may use the distance sensor 280F to measure a distance to implement fast focusing.

The optical proximity sensor 280G may include, for example, a light-emitting diode (LED) and an optical detector such as a photodiode. The light-emitting diode may be an infrared light-emitting diode. The terminal device 200 emits infrared light by using the light-emitting diode. The terminal device 200 uses a photodiode to detect infrared reflected light from an object nearby. When sufficient reflected light is detected, it may be determined that there is an object near the terminal device 200. When insufficient reflected light is detected, the terminal device 200 may determine that there is no object near the terminal device 200. The terminal device 200 may detect, by using the optical proximity sensor 280G, that the user holds the terminal device 200 close to an ear to make a call, to automatically turn off the screen for power saving. The optical proximity sensor 280G may also be used in a smart cover mode or a pocket mode to automatically unlock or lock the screen.

The ambient light sensor 280L is configured to perceive ambient light brightness. The terminal device 200 may adaptively adjust brightness of the display 294 based on the sensed ambient light brightness. The ambient light sensor 280L may also be configured to automatically adjust white balance during photographing. The ambient light sensor 280L may also cooperate with the optical proximity sensor 280G to detect whether the terminal device 200 is in a pocket to prevent a false touch.

The fingerprint sensor 280H is configured to collect a fingerprint. The terminal device 200 may use a feature of the collected fingerprint to implement fingerprint-based unlocking, accessing an application lock, fingerprint-based photographing, fingerprint-based call answering, and the like.

The temperature sensor 280J is configured to detect a temperature. In some embodiments, the terminal device 200 executes a temperature processing policy by using the temperature detected by the temperature sensor 280J. For example, when the temperature reported by the temperature sensor 280J exceeds a threshold, the terminal device 200 lowers performance of a processor located near the temperature sensor 280J, to reduce power consumption to implement thermal protection. In some other embodiments, when the temperature is below another threshold, the terminal device 200 heats the battery 242 to prevent the low temperature from causing the terminal device 200 to shut down abnormally. In some other embodiments, when the temperature is below still another threshold, the terminal device 200 boosts an output voltage of the battery 242 to prevent abnormal shutdown caused by the low temperature.

The touch sensor 280K is also referred to as a "touch panel". The touch sensor 280K may be disposed on the display 294. The touch sensor 280K and the display 294 form a touchscreen. The touch sensor 280K is configured to detect a touch operation performed on or near the display. The touch sensor may transfer the detected touch operation to the application processor to determine a type of the touch event. A visual output related to the touch operation may be provided through the display 294. In some other embodiments, the touch sensor 280K may also be disposed on a surface of the terminal device 200 at a position different from that of the display 294.

The bone conduction sensor 280M may collect a vibration signal. In some embodiments, the bone conduction sensor 280M may obtain a vibration signal of a vibration bone of a human vocal-cord part. The bone conduction sensor 280M may also contact a body pulse to receive a blood pressure beating signal. In some embodiments, the bone conduction sensor 280M may also be disposed in the headset, to combine into a bone conduction headset. The audio module 270 may obtain a speech signal through parsing based on the vibration signal, of the vibration bone of the vocal-cord part, that is obtained by the bone conduction sensor 280M, to implement a speech function. The application processor may parse heart rate information based on the blood pressure pulse signal obtained by the bone conduction sensor 280M, to implement a heart rate detection function.

The button 290 includes a power button, a volume button, and the like. The button 290 may be a mechanical button, or a touch-type button. The terminal device 200 may receive a key input, and generate a key signal input related to a user setting and function control of the terminal device 200.

The motor 291 may generate a vibration prompt. The motor 291 may be used for an incoming call vibration prompt and a touch vibration feedback. For example, touch operations applied to different applications (for example, photographing, audio playback, or the like) may correspond to different vibration feedback effects. The motor 291 may also correspond to different vibration feedback effects for touch operations applied to different areas of the display 294. Different application scenarios (for example, time reminder, information receipt, alarm clock, game, or the like) may also correspond to different vibration feedback effects. Customization of a touch vibration feedback effect may also be supported.

The indicator 292 may be an indicator light that may be configured to indicate a charging state and a power change, or may be configured to indicate a message, a missed call, a notification, and the like.

The SIM card interface 295 is configured to connect to a SIM card. The SIM card may be inserted into the SIM card interface 295 or plugged from the SIM card interface 295 to come into contact with or be separated from the terminal device 200. The terminal device 200 may support one or N SIM card interfaces, where N is a positive integer greater than 1. The SIM card interface 295 may support a nano-SIM card, a micro-SIM card, a SIM card, and the like. A plurality of cards may be inserted into one same SIM card interface 295 at the same time. The plurality of cards may be of a same type or different types. The SIM card interface 295 may be compatible with different types of SIM cards. The SIM card interface 295 may also be compatible with an external storage card. The terminal device 200 interacts with a network by using the SIM card, to implement a call function, a data communication function, and the like. In some embodiments, the terminal device 200 uses an eSIM, namely, an embedded SIM card. The eSIM card may be embedded in the terminal device 200, and cannot be separated from the terminal device 200.

The communication system and the terminal device in the embodiments of this application are described above. The following describes related terms in the embodiments of this application.

### Dual sim dual standby (dual sim dual standby, DSDS)

DSDS is a dual-card mode supported by the terminal device, and may also be understood as a dual-card capability of the terminal device, and receiving antennas of dual cards are time-division multiplexed. In the DSDS mode, the terminal device does not support service concurrency of the dual cards. Specifically: (1) when one card performs a call service, the other card cannot perform a data service (i.e., Internet surfing); and (2) when one card performs a data service, the other card can receive an incoming call but the incoming call interrupts the data service.

For a primary card of the dual cards, a call service of a secondary card prevents the primary card from performing a data service. In addition, the secondary card occupies an antenna due to behavior such as network selection, measurement, tracking area update (tracking area update, TAU), SMS, MMS, and periodic registration, resulting in poor Internet surfing experience on the primary card.

### Dual receiver-dual sim dual standby (dual receiver-dual sim dual dtandby, DR-DSDS)

DR-DSDS is another dual-card mode supported by the terminal device, and may also be understood as another dual-card capability of the terminal device, and receiving antennas of dual cards may use diversity and multiplexed as diversity antennas. To be specific, one card uses a main antenna, and the other card uses a diversity antenna. The dual cards can perform simultaneous reception but cannot perform simultaneous transmission. In the DR-DSDS mode: (1) when one card performs a call service, the other card has signal connectivity but cannot respond to paging and cannot perform TAU; and (2) when one card performs a data service and the other card performs uplink transmission, a radio frequency (radio frequency, RF) antenna needs to be occupied, affecting the experience of the card performing the data service.

### Dual sim dual active (dual sin dual active, DSDA)

DSDA is another dual-card mode supported by the terminal device, and may also be understood as another dual-card capability of the terminal device. In the DSDA mode, a terminal device supports service concurrency of dual cards, i.e., the two cards can implement simultaneous sending or reception. When one card performs a call service, the other card can receive an incoming call or can perform a data service (i.e., Internet surfing).

The DSDA mode may further include two modes, a DSDA transmission sharing mode and a DSDA transmission exclusive mode. In the DSDA transmission sharing mode, the two cards share an antenna during uplink transmission and perform time-division transmission, and the two cards separately use different antennas during downlink transmission. However, because the two cards share an antenna during uplink transmission, the performance and experience of Internet surfing by a user are reduced. In the DSDA transmission exclusive mode, the two cards separately use different antennas during uplink transmission, and also separately use different antennas during downlink transmission. The uplink transmission and the downlink transmission are completely independent, the performance and experience of Internet surfing by the user basically remain unchanged, and are better than the performance and experience in the DSDA transmission exclusive mode.

### Non-standalone (non-standalone, NSA) networking and standalone (standalone, SA) networking

With the development of 5G, 5G includes an NSA networking mode and an SA networking mode.

NSA uses existing facilities such as a 4G core network to deploy a 5G network, and is a networking mode integrating 4G and 5G. A 5G carrier based on an NSA architecture only carries user data, and control signaling is still transmitted through a 4G network. In NSA, 5G cannot work separately and is only a supplement to 4G to offload the traffic of 4G.

SA is a newly built 5G network, including a new base station, a backhaul link, and a core network. While introducing a new network element and interface, SA also adopts new technologies such as network virtualization and a software-defined network on a large scale, and combines with 5G NR. In addition, technical challenges faced by protocol development, network planning and deployment, and interoperability of the SA network will surpass those of 3G and 4G systems. Current SA has two networking modes. In one networking mode, a 5G base station is connected to a 5G core network, which is the ultimate form of a 5G network architecture, can support all applications of 5G, but requires great costs. In the other networking mode, an existing 4G base station is upgraded into an enhanced 4G base station, and the enhanced 4G base station is connected to a 5G network, which requires low costs.

In the embodiments of this application, 4G may be described as an alternative to LTE, 5G may be described as an alternative to NR. Unless otherwise specified, 4G and LTE may be described interchangeably, and 5G and NR may be described interchangeably.

As discussed above, compared with the DSDS mode, the DSDA mode provides better user experience. However, at present, mainstream chips in commercially available terminal devices have incomplete support for the DSDA mode. In many scenarios, the terminal device is in the DSDS mode rather than the DSDA mode, resulting in degraded user experience. As can be learned, user experience can be improved by making the terminal device in the DSDA mode as much as possible.

The dual-card mode supported by the terminal device is related to networks and frequency bands that the cards are in. At present, some frequency bands of an NR SA network and some frequency bands of an LTE network support the DSDA mode, and some frequency bands of the NR SA network and some frequency bands of the NR SA network may support the DSDA mode. NR SA represents a 5G network, and specifically represents that a networking mode is a 5G network of SA, referred to as NR SA for short, and LTE represents a 4G network.

The DSDA mode includes one or more DSDA combinations. The DSDA combination includes network types and frequency bands of dual cards. For ease of description, the DSDA combination may be represented in a manner of "network 1 frequency band number+network 2 frequency band number". In addition, a frequency band of an LTE network may be referred to as an LTE frequency band for short, and a frequency band of an NR network may be referred to as an NR frequency band for short. The LTE frequency band may be represented by an LTE frequency band number. The LTE frequency band number may be represented by Bx, where x is an integer greater than 0, and is, for example, B1. Similarly, the NR frequency band may be represented by an NR frequency band number. The NR frequency band number may be represented by nx, where x is an integer greater than 0, and is, for example, n78.

For example, one DSDA combination of the DSDA mode is NR SA n41+LTE B1, representing that one card camps on a frequency band indicated by n41 in the NR SA network, where n41 is an NR frequency band number representing one NR frequency band, and the other card camps on a frequency band indicated by B1 in the LTE network, where B1 represents an LTE frequency band number representing one LTE frequency band.

As can be learned from above, provided that network types and frequency bands of networks on which the dual cards currently camp meet network types and frequency bands included in any DSDA combination in the DSDA mode, a DSDA mode can be formed between the dual cards, and the terminal device can be in the DSDA mode.

In a scenario of a cell handover (handover), when the quality of a serving cell on which at least one card of the dual cards camps deteriorates, the terminal device measures, based on an indication of a network device, a neighboring cell of a serving cell on which each card of the at least one card camps to switch to a neighboring cell with better quality.

When the dual cards of the terminal device are both in a connected state, the DSDA mode is formed between the dual cards, and uplink transmission and downlink transmission can be performed on both the dual cards. However, after a cell handover is completed, if only the DSDS mode can be formed between frequency bands of cells on which the dual cards eventually camp but the DSDA mode cannot, uplink transmission of any card of the dual cards is definitely affected, resulting in a service interruption of the any card. In this case, the cell handover is a failure, severely affecting user experience.

Based on this, the embodiments of this application propose that in a scenario in which the dual cards are both in a connected state, the DSDAmode is formed between the dual cards. An improvement is made to a procedure of a cell handover. When it is determined that a DSDA mode is likely to be formed between frequency bands of cells on which dual cards eventually camp after a cell handover, a neighboring cell of at least one card is measured to perform a cell handover, so that a DSDA mode can be formed between frequency bands of cells on which the dual cards eventually camp. In this way, the dual cards can still be in a connected state, and uplink transmission on any card is kept from being affected, to keep the normal execution of a service, so that user experience can be improved.

It should be noted that the measurement of a cell (a serving cell or a neighboring cell) during a cell handover represents the measurement of a frequency of the cell. One cell corresponds to one frequency. Because one frequency corresponds to one frequency band, the measurement of a cell may be represented as the measurement of a frequency band of a cell. The frequency represents a central frequency, and the frequency band may be obtained based on the frequency.

It should be further noted that for default networks on which the dual cards camp, it is not necessary to adjust a network on which a card camps, and only a frequency band of a network on which a card currently camps is adjusted.

Dual-card communication methods in different scenarios are described below in detail with reference to the accompanying drawings.

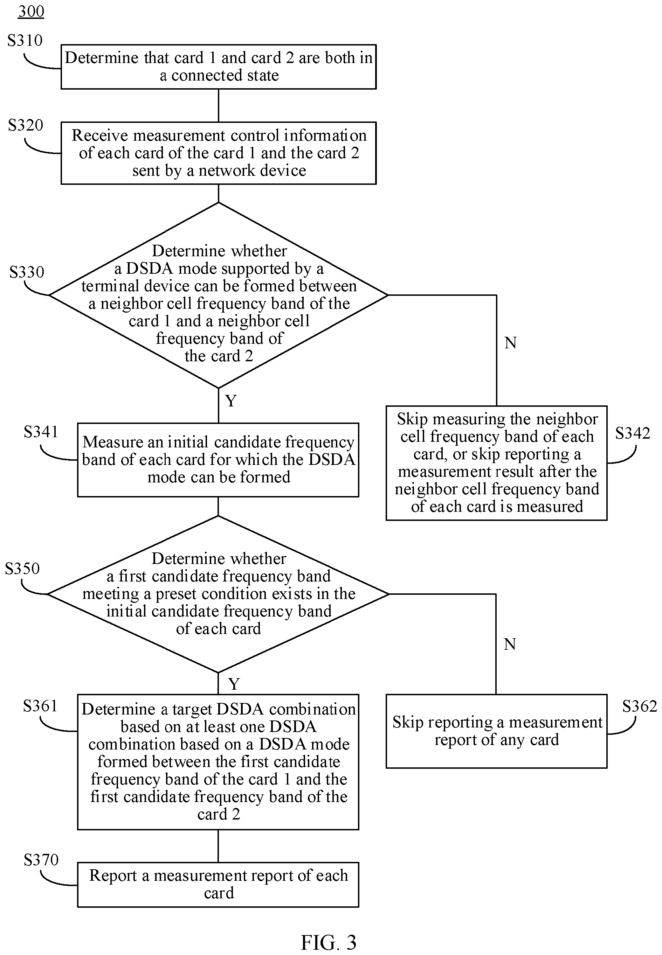

FIG. 3 is a schematic flowchart of a dual-card communication method 300 according to an embodiment of this application. The method 300 may be performed by a terminal device that supports dual-card communication, or may be performed by a chip in the terminal device. This is not limited in the embodiments of this application. For ease of description, the method 300 is described in detail by using a terminal device as an example.

A scenario of a cell handover for dual cards is provided in the embodiment shown in the method 300. Through related design, it is ensured as much as possible to still form a DSDA mode between frequency bands on which the dual cards camp after a cell handover to continue to keep a connected state, thereby improving user experience. If a DSDA mode cannot be formed between frequency bands on which the dual cards camp after a cell handover, the cell handover is not performed to continue to keep a current DSDA mode, so that the dual cards are both in a connected state to avoid affecting the normal execution of a service on each card.

In the method 300, a card 1 is one of a primary card and a secondary card, and a card 2 is the other one of the primary card and the secondary card. This is not limited herein.

S310: The terminal device determines that the card 1 and the card 2 are both in a connected state.

When the card 1 and the card 2 are both in a connected state, it means that the card 1 and the card 2 can both independently perform uplink transmission and downlink transmission. The card 1 and the card 2 are both in a connected state only when a DSDA mode is formed between the card 1 and the card 2. Therefore, when the card 1 and the card 2 are both in a connected state, a DSDA mode is definitely formed between the card 1 and the card 2. Therefore, when the terminal device determines that the card 1 and the card 2 are both in a connected state, it is equivalent to determining that a DSDA mode is formed between the card 1 and the card 2.

S320: The terminal device receives measurement control information of each card of the card 1 and the card 2 sent by a network device.

The measurement control information is configured for indicating a neighboring cell frequency of each card. The neighboring cell frequency indicates a frequency of a neighboring cell of a cell (i.e., a serving cell) on which each card currently camps. The neighboring cell frequency includes at least one frequency. The at least one frequency corresponds one to one to at least one neighboring cell. One frequency corresponds to one neighboring cell.

For ease of description, the measurement control information of the card 1 is denoted as measurement control information 1, and the measurement control information of the card 2 is denoted as measurement control information 2. The measurement control information 1 is configured for indicating the neighboring cell frequency of the card 1, and the measurement control information 2 is configured for indicating the neighboring cell frequency of the card 2.

It should be understood that, the measurement control information 1 and the measurement control information 2 may be simultaneously sent by the network device, or may be sent by the network device sequentially in different time periods. This is not limited in the embodiments of this application.

In addition, the measurement control information of each card may be sent by the network device periodically, or may be sent based on event triggering. This is not limited in the embodiments of this application.

In an embodiment in which the network device sends the measurement control information based on event triggering, an event configured for triggering the network device to send the measurement control information may be an event in which the quality of a cell on which each card currently camps deteriorates. For example, the event may include an A2 event. The A2 event represents an event in which signal quality of a serving cell is lower than a specific threshold.

The network device includes one or more base stations. The measurement control information 1 and the measurement control information 2 may be sent by a same base station or may be sent by different base stations, mainly depending on whether networks on which the card 1 and the card 2 camp are the same and whether the two support a same operator.

It is assumed that the card 1 and the card 2 support a same operator and the card 1 and the card 2 camp on a same network. In this case, the network device may include only one base station. The measurement control information 1 and the measurement control information 2 are sent by the same base station.

Alternatively, it is assumed that the card 1 and the card 2 support a same operator and the card 1 and the card 2 camp on different networks. In this case, the network device may include two base stations. One base station supports one network. Different base stations send the measurement control information to cards that camp on corresponding networks. For example, the card 1 camps on a 5G network, and the card 2 camps on a 4G network. In this case, the 5G base station sends the measurement control information 1 to the card 1, and a 4G base station sends the measurement control information 2 to the card 2.

Alternatively, it is assumed that the card 1 and the card 2 support different operators and the card 1 and the card 2 camp on a same network. In this case, the network device may include one or two base stations. When the network device includes one base station, the base station is a base station that allows different operators to share a same network (referred to as a shared network for short). The base station may allow dual cards to camp on a network supported by the base station when the dual cards do not support a same operator. In this case, the measurement control information 1 and the measurement control information 2 are sent by the same base station. When the network device includes two base stations, one base station corresponds to one operator. The measurement control information 1 and the measurement control information 2 are respectively sent by the base stations supporting corresponding operators.

S330: The terminal device determines whether a DSDA mode supported by the terminal device can be formed between a neighboring cell frequency band of the card 1 and a neighboring cell frequency band of the card 2.

The neighboring cell frequency includes at least one frequency. The neighboring cell frequency band includes at least one frequency band corresponding one to one to the at least one frequency.

In the step, the terminal device determines a corresponding neighboring cell frequency band based on the neighboring cell frequency of the card 1 obtained from the measurement control information 1, and determines a corresponding neighboring cell frequency band based on the neighboring cell frequency of the card 2 obtained from the measurement control information 2, to further determine, based on DSDA mode information of the terminal device, whether a DSDA mode supported by the terminal device can be formed between the neighboring cell frequency band of the card 1 and the neighboring cell frequency band of the card 2.

If a DSDA mode supported by the terminal device can be formed between the neighboring cell frequency band of the card 1 and the neighboring cell frequency band of the card 2, it means that a DSDA mode is likely to continue to be formed between the card 1 and the card 2 after a cell handover to continue to keep the dual cards in a connected state, and S341 continues to be performed.

If a DSDA mode supported by the terminal device cannot be formed between the neighboring cell frequency band of the card 1 and the neighboring cell frequency band of the card 2, it means that a DSDA mode cannot be formed between the card 1 and the card 2 after a cell handover and the dual cards cannot be kept in a connected state, and as a result the cell handover fails. Therefore, the neighboring cell frequency bands of the card 1 and the card 2 are not measured, or even if the neighboring cell frequency bands are measured, measurement results are not reported. For details, refer to the following related descriptions of step S342, and details are not described herein again.

The DSDA mode information is configured for indicating all DSDA combinations that are supported by the terminal device and that are of the DSDA modes that can be formed. Each DSDA combination includes network types and frequency bands of the dual cards. During implementation, the DSDA mode information may be preconfigured in the terminal device.

It should be understood that, DSDA combinations supported by a same terminal device are fixed. DSDA combinations supported by different terminal devices may be the same or may be different, which may be specifically determined based on model or hardware information of the terminal device. For ease of description, combinations of a dual-card mode supported by a terminal device are listed in the form of Table 1. In Table 1, the DSDA modes have three DSDA combinations: a DSDA combination formed by NR SAn1+NR SA n1 in the DSDA transmission sharing mode, a DSDA combination formed by NR SA n1+NR SA n78 in the DSDA transmission exclusive mode, and a DSDA combination formed by NR SAn1+LTEB41 in the DSDA transmission exclusive mode. The three DSDA combinations in Table 1 may be all DSDA combinations supported by the terminal device indicated in the DSDA mode information.

**Table 1**

| Card 1 | | Card 2 | | Dual-card mode |
|---|---|---|---|---|
| Network type | Frequency band | Network type | Frequency band | |
| NR SA | n1 | NR SA | n1 | DSDA transmission sharing |
| NR SA | n1 | NR SA | n78 | DSDA transmission exclusive |
| NR SA | n1 | LTE | B1 | DR-DSDS |
| NR SA | n1 | LTE | B41 | DSDA transmission exclusive |
| LTE | B1 | LTE | B3 | DR-DSDS |
| LTE | * | wcdma | * | DSDS |
| LTE | * | GSM | * | DSDS |
| ... | ... | ... | ... | ... |

A process in which the terminal device determines whether a DSDA mode supported by the terminal device can be formed between the neighboring cell frequency band of the card 1 and the neighboring cell frequency band of the card 2 is described by using an example below.

It is assumed that the card 1 camps on a network 1, the neighboring cell frequency band of the card 1 includes three frequency bands of the network 1, which are respectively a frequency band 11, a frequency band 12, and a frequency band 14, the card 2 camps on a network 2, and the neighboring cell frequency band of the card 2 includes two frequency bands of the network 2, which are respectively a frequency band 21 and a frequency band 22. All DSDA combinations that are supported by the terminal device and that are of the DSDA modes indicated in the DSDA mode information of the terminal device include three DSDA combinations, which are respectively a DSDA combination 1 formed by "network 1 frequency band 11+network 2 frequency band 21", a DSDA combination 2 formed by "network 1 frequency band 12+network 2 frequency band 22", and a DSDA combination 3 formed by "network 1 frequency band 14+network 2 frequency band 23". As can be learned, the DSDA combination 1 of the DSDA mode may be formed between the frequency band 11 in the neighboring cell frequency band of the card 1 and the frequency band 21 in the neighboring cell frequency band of the card 2, and the DSDA combination 2 of the DSDA mode may be formed between the frequency band 12 in the neighboring cell frequency band of the card 1 and the frequency band 22 in the neighboring cell frequency band of the card 2. Therefore, the neighboring cell frequency band of the card 1 and the neighboring cell frequency band of the card 2 can form the DSDA mode, and can form two DSDA combinations of the DSDA mode.

S342: When a DSDA mode cannot be formed between the neighboring cell frequency band of the card 1 and the neighboring cell frequency band of the card 2, the terminal device skips measuring the neighboring cell frequency band of each card, or skips reporting a measurement result after the neighboring cell frequency band of each card is measured.

Because a DSDA mode cannot be formed between the neighboring cell frequency band of the card 1 and the neighboring cell frequency band of the card 2, it means that a DSDA mode cannot be formed between the card 1 and the card 2 after a cell handover, so that it cannot be ensured that the two cards are still in a connected state. In this case, the cell handover fails. Therefore, in the step, for example, the terminal device may perform the following two solutions on the neighboring cell frequency bands of the dual cards.

In an implementation, the terminal device does not measure the neighboring cell frequency band of the card 1 and the neighboring cell frequency band of the card 2. In this way, the card 1 and the card 2 can still camp on current cells and do not perform a cell handover, to continue to keep the DSDA mode of the dual cards, so that it can be ensured that the card 1 and the card 2 remain in a connected state, thereby avoiding affecting the normal execution of a service, and ensuring good user experience. In addition, the terminal device does not measure the neighboring cell frequency bands of the card 1 and the card 2, so that a waste of power caused by measurement can be further avoided, thereby reducing power consumption.

In another implementation, the terminal device does not measure the neighboring cell frequency band of the card 1 and the neighboring cell frequency band of the card 2, but measurement results are not reported after the measurement. In this way, because the terminal device does not report measurement results, the network device does not initiate a switching request, and the terminal device does not perform a cell handover. The card 1 and the card 2 can still camp on current cells and do not perform a cell handover, to continue to keep the DSDA mode of the dual cards, so that it can be ensured that the card 1 and the card 2 continue to remain in a connected state, thereby avoiding affecting the normal execution of a service, and ensuring good user experience.

S341: When a DSDA mode can be formed between the neighboring cell frequency band of the card 1 and the neighboring cell frequency band of the card 2, the terminal device measures an initial candidate frequency band of each card for which a DSDA mode can be formed. The initial candidate frequency band of each card includes at least one or more frequency bands.

In the step, the terminal device determines frequency bands for which a DSDA mode can be formed in the neighboring cell frequency band of the card 1 and the neighboring cell frequency band of the card 2 as the initial candidate frequency band of the card 1 and the initial candidate frequency band of the card 2 respectively, and measures each frequency band in the initial candidate frequency band of each card, to obtain the quality of each frequency band in the initial candidate frequency band of each card, thereby reporting a measurement result when a specific condition is met.

For example, the quality of the frequency band may be represented by at least one of reference signal received power (reference signal receiving power, RSRP) and reference signal received quality (reference signal receiving quality, RSRQ).

It should be understood that the quality of the frequency band may also be understood as the quality of a cell, and the two may be described interchangeably.

It should be understood that the frequency bands in the initial candidate frequency band of one card are some or all frequency bands in the neighboring cell frequency band of one card. If a DSDA mode can be formed between all frequency bands in the neighboring cell frequency band of one card and at least one frequency band in the neighboring cell frequency band of the other card, the initial candidate frequency bands of the one card are all frequency bands in the neighboring cell frequency band of the one card. If a DSDA mode can be formed between some frequency bands in the neighboring cell frequency band of one card and at least one frequency band in the neighboring cell frequency band of the other card, the initial candidate frequency bands of the one card are some frequency bands in the neighboring cell frequency band of the one card.

It should further be understood that, when a DSDA mode can be formed between the neighboring cell frequency band of the card 1 and the neighboring cell frequency band of the card 2, one or more DSDA combinations of the DSDA mode can be formed. One DSDA combination includes one frequency band in the initial candidate frequency band of the card 1 and one frequency band in the initial candidate frequency band of the card 2.

An example in which the DSDA combination 1 of the DSDA mode may be formed between the frequency band 11 in the neighboring cell frequency band of the card 1 and the frequency band 21 in the neighboring cell frequency band of the card 2 and the DSDA combination 2 of the DSDAmode may be formed between the frequency band 12 in the neighboring cell frequency band of the card 1 and the frequency band 22 in the neighboring cell frequency band of the card 2 continues to be used. In the DSDA combination 1, the frequency band 11 is one frequency band in the initial candidate frequency band of the card 1, and the frequency band 21 is one frequency band in the initial candidate frequency band of the card 2. In the DSDA combination 2, the frequency band 12 is another frequency band in the initial candidate frequency band of the card 1, and the frequency band 22 is another frequency band in the initial candidate frequency band of the card 2. Therefore, the initial candidate frequency band of the card 1 includes the frequency band 11 and the frequency band 12, and the initial candidate frequency bands of the card 1 are some frequency bands in the neighboring cell frequency band of the card 1. The initial candidate frequency band of the card 2 includes the frequency band 21 and the frequency band 22, and the initial candidate frequency bands of the card 2 are all frequency bands in the neighboring cell frequency band of the card 2.

S350: The terminal device determines whether a first candidate frequency band meeting a preset condition exists in the initial candidate frequency band of each card. The first candidate frequency band of each card includes at least one or more frequency bands.

In the step, the terminal device determines, based on the quality of each frequency band in the initial candidate frequency band of each card obtained in S341, whether a first candidate frequency band meeting the preset condition exists in the initial candidate frequency band of each card. If a first candidate frequency band meeting the preset condition exists in the initial candidate frequency band of each card, S361 is performed, and if a first candidate frequency band meeting the preset condition does not exist in the initial candidate frequency band of at least one card, S362 is performed.

It should be understood that the frequency bands in the first candidate frequency band are some or all frequency bands in the initial candidate frequency band. If all frequency bands in the initial candidate frequency band meet the preset condition, the frequency bands in the first candidate frequency band are all frequency bands in the initial candidate frequency band. If some frequency bands in the initial candidate frequency band meet the preset condition, the first candidate frequency bands are some frequency bands in the initial candidate frequency band.

In some embodiments, the preset condition is: quality of a neighboring cell of each card meets an event configured for a cell handover, and one neighboring cell corresponds to one frequency band. For example, the quality of the neighboring cell may be represented by at least one of RSRP and RSRQ of a frequency band corresponding to the neighboring cell.

The event configured for a cell handover may be any following event: an A3 event, an A4 event, a B1 event, or a B2 event. The A3 event represents an event in which the quality of an intra-system intra-frequency neighboring cell of a serving cell is higher than the quality of the serving cell. The A4 event represents an event in which the quality of an intra-system inter-frequency neighboring cell of a serving cell is higher than a threshold. The B1 event represents an event in which the quality of an inter-system neighboring cell of a serving cell is higher than a threshold. The B2 event represents an event in which the quality of an inter-system neighboring cell of a serving cell is higher than a threshold and the quality of the serving cell is lower than another threshold.

It should be noted that one neighboring cell corresponds to one event, and events correspond to different neighboring cells may be the same or may be different, which specifically depends on a relationship between a serving cell and a neighboring cell. For example, if a neighboring cell is an intra-system intra-frequency cell of a serving cell, the network device configures the A3 event for the neighboring cell. If a neighboring cell is an intra-system inter-frequency cell of a serving cell, the network device configures the A4 event for the neighboring cell.

The foregoing example in which the initial candidate frequency band of the card 1 includes the frequency band 11 and the frequency band 12 and the initial candidate frequency band of the card 2 includes the frequency band 21 and the frequency band 22 continues to be used. If the frequency band 11 and the frequency band 12 in the initial candidate frequency band of the card 1 both meet the preset condition, the first candidate frequency band of the card 1 includes the frequency band 11 and the frequency band 12, which are all frequency bands in the initial candidate frequency band of the card 1. If only the frequency band 21 in the initial candidate frequency band of the card 2 meets the preset condition, the first candidate frequency band of the card 2 includes the frequency band 21, which is some frequency bands in the initial candidate frequency band of the card 1.

S362: When a first candidate frequency band meeting the preset condition does not exist in the initial candidate frequency band of each card, the terminal device does not report a measurement report of any card.

If it is determined that a first candidate frequency band meeting the preset condition does not exist in the initial candidate frequency band of one card of the card 1 and the card 2 and a first candidate frequency band meeting the preset condition exists in the other card, even if the other card is switched to a frequency band in the first candidate frequency band, a DSDA mode is not necessarily formed between the card 1 and the card 2. This cell handover fails. Therefore, even if measuring the initial candidate frequency bands of the card 1 and the card 2, the terminal device does not report a measurement report, and the network device does not indicate a cell handover.

If it is determined that a first candidate frequency band meeting the preset condition exists in neither of the initial candidate frequency band of the card 1 and the initial candidate frequency band of the card 2, it means that neither of the initial candidate frequency bands of the two cards has good quality, and it is not necessary to perform a cell handover. Therefore, even if measuring the initial candidate frequency bands of the card 1 and the card 2, the terminal device does not report a measurement report, and the network device does not indicate a cell handover.

S361: When a first candidate frequency band meeting the preset condition exists in the initial candidate frequency band of each card, the terminal device determines a target DSDA combination based on at least one DSDA combination based on a DSDA mode formed between the first candidate frequency band of the card 1 and the first candidate frequency band of the card 2, where the target DSDA combination includes a target frequency band in the first candidate frequency band of the card 1 and a target frequency band in the first candidate frequency band of the card 2.

In the step, if it is determined in S350 that a first candidate frequency band meeting the preset condition exists in the initial candidate frequency band of each card, the terminal device determines, based on the first candidate frequency band of the card 1 and the first candidate frequency band of the card 2, at least one DSDA combination of the DSDA mode that can be formed, and determines the target DSDA combination from the at least one DSDA combination. The target DSDA combination includes a frequency band (denoted as a target frequency band of the card 1) in the first candidate frequency band of the card 1 and a frequency band (denoted as a target frequency band of the card 2) in the first candidate frequency band of the card 2.

If the at least one DSDA combination includes only one DSDA combination, the unique DSDA combination is determined as the target DSDA combination.

If the at least one DSDA combination includes a plurality of DSDA combinations, the target DSDA combination is a DSDA combination of the plurality of DSDA combinations. The target DSDA combination may be any DSDA combination of the plurality of DSDA combinations, or may be a DSDA combination determined according to a rule. This is not limited herein.

In the foregoing embodiment in which the at least one DSDA combination includes a plurality of DSDA combinations, a DSDA combination with the highest priority of the plurality of DSDA combinations may be determined as the target DSDA combination.

In some embodiments, the DSDA combination with the highest priority is a combination with the best dual-card mode capability of the plurality of DSDA combinations.

In this embodiment, a priority of a DSDA combination is defined according to a dual-card mode capability. When the dual-card mode capability is better, the priority of the DSDA combination is higher. Conversely, when the dual-card mode capability is poorer, the priority of the DSDA combination is lower. A descending order in terms of the dual-card mode capability is: DSDA transmission exclusive > DSDA transmission sharing > DR-DSDS > DSDS. In this case, a descending order in terms of the priority of the DSDA combination is: DSDA transmission exclusive > DSDA transmission sharing > DR-DSDS > DSDS.

In some other embodiments, the DSDA combination with the highest priority is a combination with the best independence of downlink transmission channels of the dual cards in the plurality of DSDA combinations.

The independence represents that when the dual cards perform downlink transmission, the downlink transmission channel of one card does not affect the downlink transmission channel of the other card. For example, the card 1 has four downlink transmission channels in the frequency band 11, and the card 2 has four downlink transmission channels in the frequency band 21. A DSDA combination is formed between the dual cards when the card 1 camps on the frequency band 11 and the card 2 camps on the frequency band 21. The card 1 and the card 2 still have four downlink transmission channels each, do not affect each other, and have good independence. For another example, the card 1 has four downlink transmission channels in the frequency band 11, and the card 2 has four downlink transmission channels in the frequency band 22. A DSDA combination is formed between the dual cards when the card 1 camps on the frequency band 11 and the card 2 camps on the frequency band 22. However, in these DSDA combinations, the quantity of downlink transmission channels of each card decreases from 4 to 2, and the downlink transmission channels of each card are affected.

S370: The terminal device reports a measurement report of each card to the network device. The measurement report of each card is configured for indicating the quality of the target frequency band of each card.

In this way, based on the measurement report of each card, the network device may send a switching request to the terminal device, to indicate the terminal device to switch each card to the target frequency band. After a cell handover is completed, the card 1 camps on the target frequency band of the card 1, the card 2 camps on the target frequency band of the card 2, a DSDA mode is formed between the dual cards, and the card 1 and the card 2 can continue to keep a connected state. In this way, the cell handover is successfully completed, thereby ensuring user experience.

In the foregoing method 300, for a scenario in which the dual cards are both in a connected state, the terminal device first determines whether a DSDA mode can be formed between the neighboring cell frequency bands of the dual cards, to preferentially ensure that a DSDA mode can be formed between frequency bands on which the dual cards camp after a cell handover, then further determines a first candidate frequency band meeting a preset condition (a quality requirement) from initial candidate frequency bands for which a DSDA mode can be formed of the dual cards, and determines a target DSDA combination including a target frequency band of each card from the first candidate frequency band of each card, thereby further ensuring the quality of the frequency bands on which the dual cards camp after the cell handover.

Therefore, for a scenario in which the dual cards are both in a connected state, according to the method 300, it can be ensured that a DSDA mode continues to be formed between frequency bands on which dual cards camp after a cell handover to keep a connected state. In addition, the quality of the frequency bands on which the dual cards camp after the cell handover is better than the quality of frequency bands on which the dual cards previously camp, so that the signal quality is improved, thereby improving user experience in general.

Generally, the terminal device has two major services: a call service and a data service (i.e., an Internet service). A priority of the call service is higher than a priority of the data service. A priority of a call service (referred to as a foreground call service for short) in a foreground is higher than a priority of a call service (referred to as a background call service for short) in a background. If the priorities of the services currently performed by the dual cards are different, for example, one card performs a call service, and the other card performs a data service, if it is to preferentially consider whether the DSDA mode can be formed between the frequency bands of the cells on which the dual cards camp after the cell handover and then consider a quality requirement, for the card performing a call service, the quality of the eventually determined target frequency band may not rank at the top among the quality of all neighboring cell frequency bands. Therefore, the performance of the card performing a call service may fail to reach the optimum, affecting user experience to some extent.

Therefore, in the foregoing method 300, in some embodiments, before S330 is performed, the terminal device may first determine whether the priorities of the services currently performed by the dual cards are the same. If the priorities of the services currently performed by the dual cards are the same, S330 and subsequently steps are performed. For example, the services currently performed by the dual cards are both data services.

If the priorities of the services currently performed by the dual cards are different, for example, one card performs a call service, and the other card performs a data service, or one card performs a foreground call service, and the other card performs a background call service, the following method 400 is performed. Refer to detailed descriptions below.

It should be understood that sequence numbers of the steps in the foregoing method 300 do not mean execution sequences. The execution sequences of the processes should be determined according to functions and internal logic of the processes, and should not be construed as any limitation on the implementation processes of the embodiments of this application. For example, an execution sequence of step S310 and step S320 can be reversed.

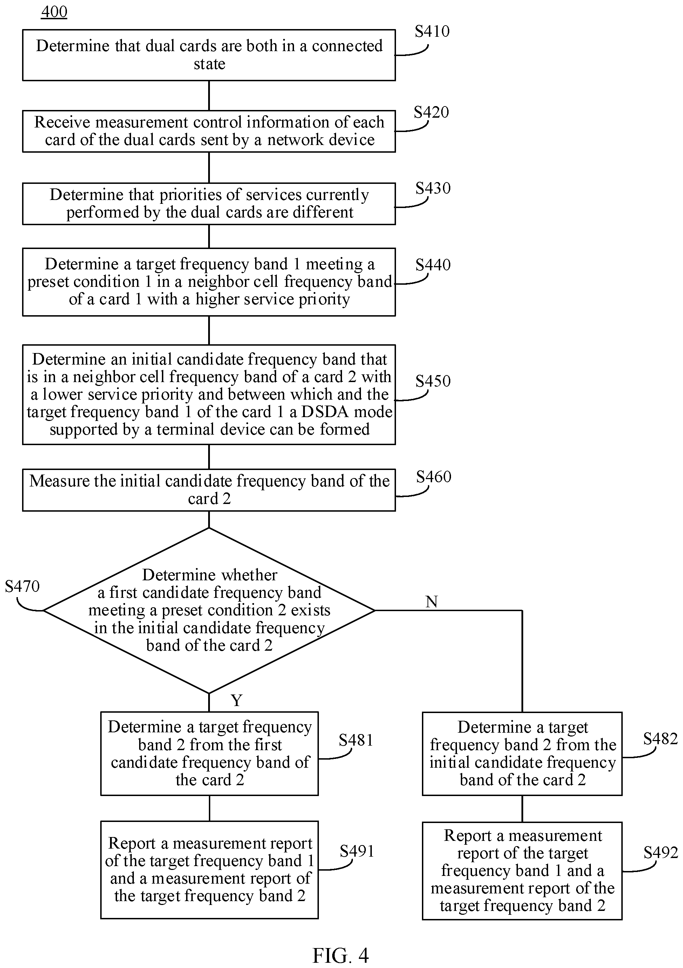

FIG. 4 is a schematic flowchart of a dual-card communication method 400 according to an embodiment of this application. Same as the method 300, for ease of description, the method 400 is described in detail by using a terminal device as an example.

In the method 400, a card 1 is a card with a high service priority, and a card 2 is a card with a low service priority. Generally, the terminal device has two major services: a call service and a data service (i.e., an Internet service). In addition, a priority of the call service is higher than a priority of the data service. A priority of a foreground call service is higher than a priority of a background call service.

S410: The terminal device determines that dual cards are both in a connected state. For detailed descriptions, refer to the related descriptions of step S310, and details are not described again.

S420: The terminal device receives measurement control information of each card of the dual cards sent by a network device.

The measurement control information of each card is configured for indicating a neighboring cell frequency of each card. For detailed descriptions, refer to the related descriptions of step S320, and details are not described again.

S430: The terminal device determines that priorities of services currently performed by the dual cards are different.

A priority of a service currently performed by one card is high, and a priority of a service currently performed by the other card is low. For ease of description, the card with a high service priority is denoted as the card 1, and the card with a low service priority is denoted as the card 2.

For example, the card 1 currently performs a call service, and the card 2 currently performs a data service. For another example, the card 1 currently performs a foreground call service, and the card 2 currently performs a background call service.

S440: The terminal device determines a target frequency band 1 meeting a preset condition 1 in a neighboring cell frequency band of the card 1 with a higher service priority. In the step, the terminal device measures the corresponding neighboring cell frequency band from the neighboring cell frequency band of the card 1 based on the measurement control information of the card 1 to obtain the quality of each frequency band in the neighboring cell frequency band, and determines, based on the quality of each frequency band, the target frequency band 1 meeting the preset condition 1 in the neighboring cell frequency band of the card 1.

For example, the preset condition 1 is: quality of a neighboring cell of the card 1 meets an event configured for a cell handover, and one neighboring cell corresponds to one frequency band. The quality of a cell may be represented by at least one of RSRP and RSRQ of a frequency band corresponding to the cell. For detailed descriptions of the event configured for a cell handover, refer to the foregoing related descriptions of S350, and details are not described again.

It should be understood that the target frequency band 1 is a frequency band meeting the preset condition 1 in the neighboring cell frequency band of the card 1, and may be any frequency band meeting the preset condition 1. This is not limited in the embodiments of this application. When the frequency band meeting the preset condition 1 includes a plurality of frequency bands, for example, a frequency band with the best quality of the plurality of frequency bands may be determined as the target frequency band 1.

S450: The terminal device determines an initial candidate frequency band that is in a neighboring cell frequency band of the card 2 with a lower service priority and between which and the target frequency band 1 of the card 1 a DSDA mode supported by the terminal device can be formed. The initial candidate frequency band of the card 2 includes one or more frequency bands.

It should be understood that the initial candidate frequency bands of the card 2 are some or all frequency bands in the neighboring cell frequency band of the card 2. If a DSDA mode can be formed between all frequency bands in the neighboring cell frequency band of the card 2 and the target frequency band 1 of the card 1, the initial candidate frequency bands of the card 2 are all frequency bands in the neighboring cell frequency band of the card 2. If a DSDA mode can be formed between some frequency bands in the neighboring cell frequency band of the card 2 and the target frequency band 1 of the card 1, the initial candidate frequency bands of the card 2 are some frequency bands in the neighboring cell frequency band of the card 2.

S460: The terminal device measures the initial candidate frequency bands of the card 2 to obtain the quality of each frequency band in the initial candidate frequency band of the card 2. For detailed descriptions of the quality of the frequency band, refer to the foregoing related descriptions, and details are not described again.

S470: The terminal device determines whether a first candidate frequency band meeting a preset condition 2 exists in the initial candidate frequency band of the card 2. The first candidate frequency band includes one or more frequency bands.

In the step, the terminal device determines, based on the quality of each frequency band in the initial candidate frequency band of the card 2 obtained in S460, whether a first candidate frequency band meeting the preset condition 2 exists in the initial candidate frequency band of the card 2. If it is determined that a first candidate frequency band meeting the preset condition 2 exists in the initial candidate frequency band of the card 2, S481 is performed, and if it is determined that a first candidate frequency band meeting the preset condition 2 does not exist in the initial candidate frequency band of the card 2, S482 is performed.

In some embodiments, the preset condition 2 is: quality of a neighboring cell of the card 2 meets an event configured for a cell handover, and one neighboring cell corresponds to one frequency band. For example, the quality of the cell is represented by at least one of RSRP and RSRQ of a frequency band corresponding to the cell. For detailed descriptions of the event configured for a cell handover, refer to the foregoing related descriptions of S350, and details are not described again.

It should be understood that the frequency bands in the first candidate frequency band are some or all frequency bands in the initial candidate frequency band. If all frequency bands in the initial candidate frequency band meet the preset condition, the frequency bands in the first candidate frequency band are all frequency bands in the initial candidate frequency band. If some frequency bands in the initial candidate frequency band meet the preset condition, the first candidate frequency bands are some frequency bands in the initial candidate frequency band.

S481: When a first candidate frequency band meeting the preset condition 2 exists in the initial candidate frequency band of the card 2, the terminal device determines a target frequency band 2 from the first candidate frequency band of the card 2.

If the first candidate frequency band of the card 2 includes one frequency band, the unique frequency band is determined as the target frequency band 2.

If the first candidate frequency band of the card 2 includes a plurality of frequency bands, a frequency band of the plurality of frequency bands is determined as the target frequency band 2. The target frequency band 2 may be any frequency band of the plurality of frequency bands, or may be a frequency band determined according to a rule. This is not limited herein.

In an embodiment in which the first candidate frequency band of the card 2 includes a plurality of frequency bands, the terminal device determines a frequency band with the highest priority in the first candidate frequency band as the target frequency band 2.

In some embodiments, the frequency band with the highest priority is a frequency band with the best dual-card mode capability of DSDA modes formed between the first candidate frequency band of the card 2 and the target frequency band 1 of the card 1. In other words, the frequency band with the best dual-card mode capability of the DSDA modes formed between the first candidate frequency band and the target frequency band 1 is the target frequency band 2.

In this embodiment, a priority of a frequency band in the first candidate frequency band is defined from a dual-card mode capability. When a dual-card mode capability formed between a frequency band in the first candidate frequency band and the target frequency band 1 of the card 1 is better, a priority of the frequency band is higher. Conversely, when a dual-card mode capability formed between a frequency band in the first candidate frequency band and the target frequency band 1 of the card 1 is poorer, a priority of the frequency band is lower. A descending order in terms of the dual-card mode capability is: DSDA transmission exclusive > DSDA transmission sharing > DR-DSDS > DSDS.

In some other embodiments, the frequency band with the highest priority is a frequency band with the best quality in the first candidate frequency band of the card 2. In other words, the frequency band with the best capability in the first candidate frequency band is the target frequency band 2. The quality of the frequency band may be represented by at least one of an RSRP value and an RSRQ value.

In this embodiment, a priority of a frequency band in the first candidate frequency band is defined from the quality of the frequency band. When the quality of a frequency band in the first candidate frequency band is better, a priority of the frequency band is higher. Conversely, when the quality of a frequency band in the first candidate frequency band is poorer, a priority of the frequency band is lower.

It should be noted that the priority of the frequency band in the first candidate frequency band defined above may be separately used, or may be used in combination.

When the priority of the foregoing frequency band is used in combination, in some embodiments, the dual-card mode capability and the quality of the frequency band are combined, the priority of the frequency band is preferentially considered from the dual-card mode capability, and then the priority of the frequency band is considered from the quality of the frequency band. Generally, if a plurality of frequency bands have the best dual-card mode capability of the DSDA modes formed between the first candidate frequency band and the target frequency band 1 of the card 1, the target frequency band 2 may be further determined in combination with the quality of the frequency band.

S491: The terminal device reports a measurement report of the target frequency band 1 and a measurement report of the target frequency band 2.

Correspondingly, the network device indicates, based on a measurement report of the target frequency band of each card, the terminal device to switch each card to the target frequency band. After a cell handover is completed, the card 1 camps on the target frequency band 1, the card 2 camps on the target frequency band 2, a DSDA mode is formed between the dual cards, and the card 1 and the card 2 can continue to keep a connected state. In this way, the cell handover is successfully completed, thereby ensuring user experience.

S482: When a first candidate frequency band meeting the preset condition 2 does not exist in the initial candidate frequency band of the card 2, the terminal device determines a target frequency band 2 from the initial candidate frequency band of the card 2.

When a first candidate frequency band meeting the preset condition 2 does not exist in the initial candidate frequency band of the card 2, in consideration of that the quality of the frequency band on which the card 2 currently camps is very likely to keep deteriorating within a subsequent time period, even if the initial candidate frequency band of the card 2 does not meet a quality requirement, because it is considered that the quality of the initial candidate frequency band may improve within the subsequent time period, in this case, the target frequency band 2 is still determined from the initial candidate frequency band to be reported to the network device.

If the initial candidate frequency band of the card 2 includes one frequency band, the unique frequency band is determined as the target frequency band 2.

If the initial candidate frequency band of the card 2 includes a plurality of frequency bands, a frequency band of the plurality of frequency bands is determined as the target frequency band 2. The target frequency band 2 may be any frequency band of the plurality of frequency bands, or may be a frequency band determined according to a rule. This is not limited herein.

In an embodiment in which the initial candidate frequency band of the card 2 includes a plurality of frequency bands, the terminal device determines a frequency band with the highest priority in the initial candidate frequency band as the target frequency band 2.

In some embodiments, the frequency band with the highest priority is a frequency band with the best dual-card mode capability of a DSDA mode formed between the initial candidate frequency band of the card 2 and the target frequency band 1 of the card 1. In other words, the frequency band with the best dual-card mode capability of the DSDA modes formed between the initial candidate frequency band and the target frequency band 1 is the target frequency band 2.

In this embodiment, a priority of a frequency band in the initial candidate frequency band is defined from a dual-card mode capability. For detailed descriptions, refer to the foregoing related descriptions of the priority of the frequency band in the first candidate frequency band being defined from the dual-card mode capability, and it is only necessary to replace the foregoing first candidate frequency band with the initial candidate frequency band here. Details are not described again.

In some other embodiments, the frequency band with the highest priority is a frequency band with the best quality in the initial candidate frequency band of the card 2. In other words, the frequency band with the best capability in the initial candidate frequency band is the target frequency band 2. The quality of the frequency band may be represented by at least one of an RSRP value and an RSRQ value.

In this embodiment, a priority of a frequency band in the initial candidate frequency band is defined from the quality of the frequency band. For detailed descriptions, refer to the foregoing related descriptions of the priority of the frequency band in the first candidate frequency band being defined from the quality of the frequency band, and it is only necessary to replace the foregoing first candidate frequency band with the initial candidate frequency band here. Details are not described again.

It should be noted that the priority of the frequency band in the initial candidate frequency band defined above may be separately used, or may be used in combination. For details, refer to the foregoing related descriptions of the priority of the frequency band in the first candidate frequency band, and it is only necessary to replace the foregoing first candidate frequency band with the initial candidate frequency band here. Details are not described again.

S492: The terminal device reports a measurement report of the target frequency band 1 and a measurement report of the target frequency band 2.

For detailed descriptions, refer to the related descriptions of step S491, and details are not described again.

In the foregoing method 400, for a scenario of the dual cards being both in a connected state, when the priorities of the services currently performed by the dual cards are different, the terminal device first determines a target frequency band 1 meeting a preset condition 1 from the neighboring cell frequency band of the card 1 with a high service priority to preferentially ensure the signal quality of the card 1 with a high service priority, next, determines an initial candidate frequency band between which and the target frequency band 1 of the card 1 a DSDA combination can be formed from the neighboring cell frequency band of the card 2 with a low service priority, determines a first candidate frequency band meeting a preset condition 2 from the initial candidate frequency band, and determines a target frequency band 2 from the first candidate frequency band, thereby further ensuring that a DSDA mode can still be formed between frequency bands on which the dual cards camp after a cell handover to keep a connected state, and improving user experience in general.

It should be understood that the process of the foregoing method 400 is only a schematic description and should not constitute a limitation to the embodiments of this application.

In some embodiments, when a first candidate frequency band meeting the preset condition 2 does not exist in the initial candidate frequency band of the card 2, the terminal device may only report the measurement report of the target frequency band 1, and does not report a measurement report of any frequency band of the card 2.

In this way, the network device may indicate, based on the measurement report, the terminal device to switch the card 1 to a cell corresponding to the target frequency band 1 with good quality, and the card 2 still camps on a current cell. Although a DSDA mode cannot necessarily be formed between a frequency band on which the card 1 camps after the cell handover and a frequency band of the cell on which the card 2 currently camps, a quality requirement of a service currently performed by the card 1 can be preferentially ensured.

It should be further understood that sequence numbers of the steps in the foregoing method 400 do not mean execution sequences. The execution sequences of the processes should be determined according to functions and internal logic of the processes, and should not be construed as any limitation on the implementation processes of the embodiments of this application.

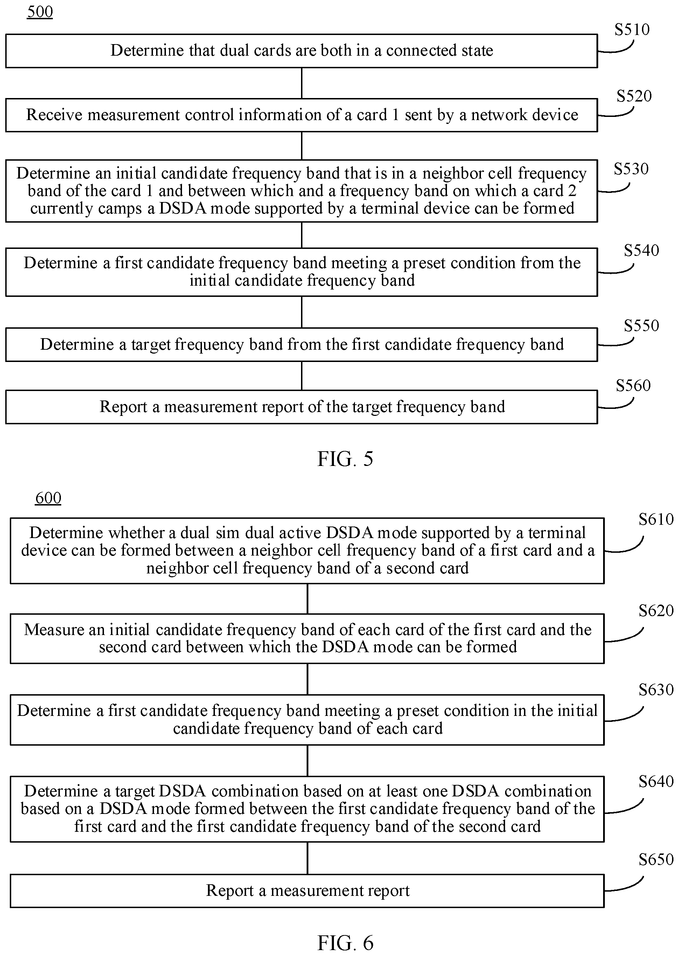

FIG. 5 is a schematic flowchart of a dual-card communication method 500 according to an embodiment of this application. Same as the method 300, for ease of description, the method 500 is described in detail by using a terminal device as an example.

A difference from the foregoing method 300 and method 400 lies in that the method 500 describes a scenario in which one card of dual cards requires a cell handover. In the method 500, a card 1 is one of a primary card and a secondary card, and a card 2 is the other one of the primary card and the secondary card. This is not limited herein.

S510: The terminal device determines that dual cards are both in a connected state. For detailed descriptions, refer to the related descriptions of step S310, and details are not described again.

S520: The terminal device receives measurement control information of the card 1 sent by a network device.

The measurement control information is configured for indicating a neighboring cell frequency of the card 1. For detailed descriptions of the measurement control information, refer to the related descriptions of step S320, and details are not described again.

S530: The terminal device determines an initial candidate frequency band that is in a neighboring cell frequency band of the card 1 and between which and a frequency band on which the card 2 currently camps a DSDA mode supported by the terminal device can be formed. The initial candidate frequency band includes one or more frequency bands.

In the step, the terminal device determines a corresponding neighboring cell frequency band based on the neighboring cell frequency of the card 1 determined from the measurement control information of the card 1, and further determines the initial candidate frequency band that is in the neighboring cell frequency band of the card 1 and between which and the frequency band on which the card 2 currently camps a DSDA mode supported by the terminal device can be formed.

It should be understood that the initial candidate frequency bands of the card 1 are some or all frequency bands in the neighboring cell frequency band of the card 1. If a DSDA mode can be formed between all frequency bands in the neighboring cell frequency band of the card 1 and the frequency band on which the card 2 currently camps, the initial candidate frequency bands of the card 1 are all frequency bands in the neighboring cell frequency band of the card 1. If a DSDA mode can be formed between some frequency bands in the neighboring cell frequency band of the card 1 and the frequency band on which the card 2 currently camps, the initial candidate frequency bands of the card 1 are some frequency bands in the neighboring cell frequency band of the card 1.

S540: The terminal device determines a first candidate frequency band meeting a preset condition from the initial candidate frequency band. The initial candidate frequency band includes one or more frequency bands.

In the step, the terminal device measures the initial candidate frequency bands of the card 1 to obtain the quality of each frequency band in the initial candidate frequency band of the card 1, to determine a first candidate frequency band meeting the preset condition.

It should be understood that the frequency bands in the first candidate frequency band are some or all frequency bands in the initial candidate frequency band of the card 1. If all frequency bands in the initial candidate frequency band meet the preset condition, the frequency bands in the first candidate frequency band are all frequency bands in the initial candidate frequency band. If some frequency bands in the initial candidate frequency band meet the preset condition, the first candidate frequency bands are some frequency bands in the initial candidate frequency band.

In some embodiments, the preset condition is: quality of a neighboring cell of the card 1 meets an event configured for a cell handover, and one neighboring cell corresponds to one frequency band. For example, the quality of the neighboring cell may be represented by at least one of RSRP and RSRQ of a frequency band corresponding to the neighboring cell. For detailed descriptions of the event configured for a cell handover, refer to the foregoing related descriptions of S350, and details are not described again.

S550: The terminal device determines a target frequency band from the first candidate frequency band.

If the first candidate frequency band includes one frequency band, the unique frequency band is determined as the target frequency band.

If the first candidate frequency band includes a plurality of frequency bands, a frequency band of the plurality of frequency bands is determined as the target frequency band. The target frequency band may be any frequency band of the plurality of frequency bands, or may be a frequency band determined according to a rule. This is not limited herein.

In an embodiment in which the first candidate frequency band includes a plurality of frequency bands, the terminal device determines a frequency band with the highest priority in the first candidate frequency band as the target frequency band.

In some embodiments, the frequency band with the highest priority is a frequency band with the best dual-card mode capability of a DSDA mode formed between the first candidate frequency band and the frequency band on which the card 2 currently camps. In other words, the frequency band with the best dual-card mode capability of the DSDA modes formed between the first candidate frequency band and the frequency band on which the card 2 currently camps is the target frequency band.

In some other embodiments, the frequency band with the highest priority is a frequency band with the best quality in the first candidate frequency band. In other words, the frequency band with the best capability in the first candidate frequency band is the target frequency band.

It should be noted that the priority of the frequency band in the foregoing first candidate frequency band may be separately used, or may be used in combination.

For detailed descriptions of the foregoing determining a target frequency band from the first candidate frequency band, refer to the foregoing related descriptions, and details are not described again.

S560: The terminal device reports a measurement report of the target frequency band, where the measurement report is configured for indicating the quality of the target frequency band.

Correspondingly, the network device indicates, based on a measurement report of the target frequency band, the terminal device to switch the card 1 to the target frequency band. After a cell handover is completed, the card 1 camps on the target frequency band 1, the card 2 still camps on the current frequency band, a DSDA mode is formed between the dual cards, and the card 1 and the card 2 can continue to keep a connected state. In this way, the cell handover is successfully completed, thereby ensuring user experience.

In the foregoing method 500, the terminal device first determines whether a DSDA mode can be formed between a neighboring cell frequency band of the card 1 that requires neighboring cell measurement and a frequency band on which the card 2 currently camps, to preferentially ensure that a DSDA mode can still be formed between a frequency band on which the card 1 camps after a cell handover and the frequency band on which the card 2 currently camps, then further determines a first candidate frequency band meeting a preset condition (a quality requirement) from an initial candidate frequency band for which a DSDA mode can be formed of the card 1, and determines a target frequency band from the first candidate frequency band, thereby further ensuring the quality of a frequency band on which the card 1 camps after the cell handover. In this way, a DSDA mode can continue to be formed between the frequency band on which the card 1 camps after the cell handover of the card 1 and the frequency band on which the card 2 currently camps to keep a connected state, and the quality of the frequency band on which the card 1 camps after the cell handover is better than the quality of a frequency band on which the card 1 previously camps, so that the signal quality is improved, thereby improving user experience in general.

FIG. 6 is a schematic flowchart of a dual-card communication method 600 according to an embodiment of this application. The method 600 may be performed by a terminal device that supports dual-card communication, or may be performed by a chip in the terminal device. This is not limited in the embodiments of this application. For ease of description, the method 600 is described in detail by using a terminal device as an example.

A scenario of a cell handover for dual cards is provided in the embodiment shown in the method 600. Through related design, it is ensured as much as possible to still form a DSDA mode between frequency bands on which the dual cards camp after a cell handover to continue to keep a connected state, to avoid affecting the normal execution of a service on each card, thereby improving user experience.

In the method 600, a first card and a second card of the terminal device are both in a connected state, the first card may be one card of a primary card and a secondary card, and the second card is the other card of the primary card and the secondary card. In addition, the method 600 may be analogous to the method 300, and the first card may be analogous to the card 1 in the method 300, and the second card may be analogous to the card 2 in the method 300.

When the first card and the second card are both in a connected state, it means that the first card and the second card can both independently perform uplink transmission and downlink transmission. The first card and the second card are both in a connected state only when a DSDA mode is formed between the first card and the second card. Therefore, when the first card and the second card are both in a connected state, a DSDA mode is definitely formed between the first card and the second card, i.e., the terminal device is in a DSDA mode. Therefore, when the first card and the second card are both in a connected state, it is equivalent to that a DSDA mode is formed between the first card and the second card.

S610: The terminal device determines whether a dual sim dual active DSDA mode supported by the terminal device can be formed between a neighboring cell frequency band of the first card and a neighboring cell frequency band of the second card. The neighboring cell frequency band of the first card includes at least one frequency band, and the neighboring cell frequency band of the second card includes at least one frequency band.

In the step, the terminal device may determine a neighboring cell frequency of the first card based on measurement control information of the first card sent by a network device, and determine a neighboring cell frequency of the second card based on measurement control information of the second card sent by the network device. The neighboring cell frequency indicates a frequency of a neighboring cell of a cell (i.e., a serving cell) on which each card currently camps. The neighboring cell frequency includes at least one frequency. The at least one frequency corresponds one to one to at least one neighboring cell. One frequency corresponds to one neighboring cell. Therefore, the neighboring cell frequency band of the first card may be determined based on the neighboring cell frequency of the first card, the neighboring cell frequency band of the second card may be determined based on the neighboring cell frequency of the second card, and it is determined, based on DSDA mode information of the terminal device, whether a DSDA mode supported by the terminal device can be formed between the neighboring cell frequency band of the first card and the neighboring cell frequency band of the second card.

The DSDA mode information is configured for indicating all DSDA combinations that are supported by the terminal device and that are of the DSDA modes that can be formed. Each DSDA combination includes network types and frequency bands of the dual cards. During implementation, the DSDA mode information may be preconfigured in the terminal device.

It should be understood that, DSDA combinations supported by a same terminal device are fixed. DSDA combinations supported by different terminal devices may be the same or may be different, which may be specifically determined based on model or hardware information of the terminal device. For detailed descriptions, refer to the related descriptions above, and details are not described again.

The network device includes one or more base stations. The measurement control information of the first card and the measurement control information of the second card may be sent by a same base station or may be sent by different base stations, mainly depending on whether networks on which the first card and the second card camp are the same and whether the two support a same operator. For detailed descriptions, refer to the related descriptions of S320 above, and it is only necessary to replace the card 1 and the card 2 above with the first card and the second card respectively. Details are not described again.

S620: The terminal device measures an initial candidate frequency band of each card of the first card and the second card between which the DSDA mode can be formed.

If a DSDA mode supported by the terminal device can be formed between the neighboring cell frequency band of the first card and the neighboring cell frequency band of the second card, it means that a DSDA mode is likely to continue to be formed between the first card and the second card after a cell handover to continue to keep the dual cards in a connected state, and a cell handover can be successfully implemented. Therefore, in the step, when a DSDA mode can be formed between the neighboring cell frequency band of the first card and the neighboring cell frequency band of the second card, the terminal device determines frequency bands for which a DSDA mode can be formed in the neighboring cell frequency band of the first card and the neighboring cell frequency band of the second card as the initial candidate frequency band of the first card and the initial candidate frequency band of the second card respectively, and measures each frequency band in the initial candidate frequency band of each card, to obtain the quality of each frequency band in the initial candidate frequency band of each card, thereby reporting a measurement result when a specific condition is met.

When a DSDA mode can be formed between the neighboring cell frequency band of the first card and the neighboring cell frequency band of the second card, one or more DSDA combinations of the DSDA mode can be formed. One DSDA combination includes one frequency band in the initial candidate frequency band of the first card and one frequency band in the initial candidate frequency band of the second card.

It should be understood that the frequency bands in the initial candidate frequency band of each card are some or all frequency bands in the neighboring cell frequency band of each card. If a DSDA mode can be formed between all frequency bands in the neighboring cell frequency band of one card and at least one frequency band in the neighboring cell frequency band of the other card, the initial candidate frequency bands of the one card are all frequency bands in the neighboring cell frequency band of the one card. If a DSDA mode can be formed between some frequency bands in the neighboring cell frequency band of one card and at least one frequency band in the neighboring cell frequency band of the other card, the initial candidate frequency bands of the one card are some frequency bands in the neighboring cell frequency band of the one card.

For example, the quality of the frequency band may be represented by at least one of RSRP and RSRQ.

It should be understood that the quality of the frequency band may also be understood as the quality of a cell corresponding to a frequency band, and the two may be described interchangeably.

A process in which the terminal device determines the initial candidate frequency band of each card is described by using an example below.

It is assumed that the first card camps on a network 1, the neighboring cell frequency band of the first card includes three frequency bands of the network 1, which are respectively a frequency band 11, a frequency band 12, and a frequency band 14, the second card camps on a network 2, and the neighboring cell frequency band of the second card includes two frequency bands of the network 2, which are respectively a frequency band 21 and a frequency band 22. All DSDA combinations that are supported by the terminal device and that are of the DSDA modes indicated in the DSDA mode information of the terminal device include three DSDA combinations, which are respectively a DSDA combination 1 formed by "network 1 frequency band 11+network 2 frequency band 21", a DSDA combination 2 formed by "network 1 frequency band 12+network 2 frequency band 22", and a DSDA combination 3 formed by "network 1 frequency band 14+network 2 frequency band 23". As can be learned, the DSDA combination 1 may be formed between the frequency band 11 in the neighboring cell frequency band of the first card and the frequency band 21 in the neighboring cell frequency band of the second card, and the DSDA combination 2 may be formed between the frequency band 12 in the neighboring cell frequency band of the first card and the frequency band 22 in the neighboring cell frequency band of the second card. Therefore, the neighboring cell frequency band of the first card and the neighboring cell frequency band of the second card can form the DSDA mode, and can form two DSDA combinations of the DSDA mode. In the DSDA combination 1, the frequency band 11 is one frequency band in the initial candidate frequency band of the first, and the frequency band 21 is one frequency band in the initial candidate frequency band of the second card. In the DSDA combination 2, the frequency band 12 is another frequency band in the initial candidate frequency band of the first card, and the frequency band 22 is another frequency band in the initial candidate frequency band of the second card. Therefore, the initial candidate frequency band of the first card includes the frequency band 11 and the frequency band 12, and the initial candidate frequency bands of the first card are some frequency bands in the neighboring cell frequency band of the first card. The initial candidate frequency band of the second card includes the frequency band 21 and the frequency band 22, and the initial candidate frequency bands of the second card are all frequency bands in the neighboring cell frequency band of the second card.

S630: The terminal device determines a first candidate frequency band meeting a preset condition in the initial candidate frequency band of each card, where the preset condition includes: quality of a neighboring cell of each card meets an event configured for a cell handover, and one neighboring cell corresponds to one frequency band. The first candidate frequency band includes at least one frequency band.

In the step, the terminal device determines, according to the preset condition and based on the quality of each frequency band in the initial candidate frequency band of each card obtained in S620, that a first candidate frequency band meeting the preset condition exists in the initial candidate frequency band of each card.

In the preset condition, for example, the quality of the neighboring cell may be represented by at least one of RSRP and RSRQ of a frequency band corresponding to the neighboring cell. In addition, the event configured for a cell handover may be any following event: an A3 event, an A4 event, a B1 event, or a B2 event. For detailed descriptions of the events, refer to the related descriptions above, and details are not described again.

It should be understood that the frequency bands in the first candidate frequency band are some or all frequency bands in the initial candidate frequency band. If all frequency bands in the initial candidate frequency band meet the preset condition, the frequency bands in the first candidate frequency band are all frequency bands in the initial candidate frequency band. If some frequency bands in the initial candidate frequency band meet the preset condition, the first candidate frequency bands are some frequency bands in the initial candidate frequency band.

S640: The terminal device determines a target DSDA combination based on at least one DSDA combination based on a DSDA mode formed between the first candidate frequency band of the first card and the first candidate frequency band of the second card, where the target DSDA combination includes a target frequency band in the first candidate frequency band of the first card and a target frequency band in the first candidate frequency band of the second card.

In the step, if it is determined in S640 that a first candidate frequency band meeting the preset condition exists in the initial candidate frequency band of each card, the terminal device determines, based on the first candidate frequency band of the first card and the first candidate frequency band of the second card, at least one DSDA combination of the DSDA mode that can be formed, and determines the target DSDA combination from the at least one DSDA combination.

In the foregoing at least one DSDA combination, one DSDA combination includes one frequency band in the first candidate frequency band of the first card and one frequency band in the first candidate frequency band of the second card. For the target DSDA combination, one frequency band in the first candidate frequency band of the first card included in the target DSDA combination is denoted as the target frequency band of the first card, and one frequency band in the first candidate frequency band of the second card included in the target DSDA combination is denoted as the target frequency band of the second card.

If the at least one DSDA combination includes only one DSDA combination, the unique DSDA combination is determined as the target DSDA combination.

If the at least one DSDA combination includes a plurality of DSDA combinations, the target DSDA combination is a DSDA combination of the plurality of DSDA combinations. The target DSDA combination may be any DSDA combination of the plurality of DSDA combinations, or may be a DSDA combination determined according to a rule. This is not limited herein.

In some embodiments, the at least one DSDA combination includes a plurality of DSDA combinations; and the determining a target DSDA combination based on at least one DSDA combination based on a DSDA mode formed between the first candidate frequency band of the first card and the first candidate frequency band of the second card includes: determining a DSDA combination with the highest priority of the at least one DSDA combination as the target DSDA combination.

In this way, the terminal device uses the DSDA combination with the highest priority as the target DSDA combination, so that the DSDA mode formed between the frequency bands on which the first card and the second card camp after the cell handover can be an optimal mode set on the terminal device, thereby improving the performance of a dual-card mode.

In an example, the target DSDA combination is a combination with the best dual-card mode capability of the plurality of DSDA combinations.

In this embodiment, a priority of a DSDA combination is defined according to a dual-card mode capability. For detailed descriptions, refer to the related descriptions of S361 above, and it is only necessary to replace the card 1 and the card 2 above with the first card and the second card here respectively. Details are not described again.

A combination with the best dual-card mode capability of the plurality of DSDA combinations is determined as the target DSDA combination, and after the terminal device performs a cell handover on the first card and the second card based on the target DSDA combination, the DSDA mode formed between the frequency bands on which the first card and the second card camp after the cell handover can be a dual-card mode with the best performance, and providing the best user experience.

In some example, the target DSDA combination with a combination with the best independence of downlink transmission channels of the dual cards in the plurality of DSDA combinations.

The independence represents that when the dual cards perform downlink transmission in the DSDA mode, the downlink transmission channel of one card does not affect the downlink transmission channel of the other card, and a quantity of downlink transmission channels of each card is not reduced. For detailed descriptions in this embodiment, refer to the related descriptions of S361 above, and it is only necessary to replace the card 1 and the card 2 above with the first card and the second card here respectively. Details are not described again.

A combination with the highest independence of downlink transmission channels of the dual cards in the plurality of DSDA combinations is determined as the target DSDA combination, and after the terminal device performs a cell handover on the first card and the second card based on the target DSDA combination, a DSDA mode can be formed between the frequency bands on which the first card and the second card camp, and the quantity of downlink transmission channels of each card is kept as much as possible from being reduced, thereby improving transmission efficiency.

S650: The terminal device reports a measurement report, where the measurement report is configured for indicating quality of the target frequency band of the first card and quality of the target frequency band of the second card.

Correspondingly, the network device may send a switching request to the terminal device based on the measurement report, to indicate the terminal device to switch each card to a corresponding target frequency band. After a cell handover is completed, the first card camps on the target frequency band of the first card, the second card camps on the target frequency band of the second card, and a DSDA mode is formed between the dual cards to continue to keep a connected state. In this way, the cell handover is successfully completed, thereby ensuring user experience.

For example, the measurement report may include a first measurement report for the first card and a second measurement report for the second card. The first measurement report is configured for indicating quality of the target frequency band of the first card, and the second measurement report is configured for indicating quality of the target frequency band of the second card. In this way, the terminal device may report the first measurement report and the second measurement report to the network device respectively.

In the dual-card communication method provided in the embodiments of this application, when the first card and the second card are both in a connected state, the DSDA mode is formed between the first card and the second card. When a cell handover needs to be performed, it is first determined whether a DSDA mode supported by the terminal device can be formed between the neighboring cell frequency band of the first card and the neighboring cell frequency band of the second card, and subsequent steps continue to be performed when the DSDA mode can be formed, to preferentially ensure that the DSDA mode can still be formed between frequency bands of cells on which the first card and the second card camp after the cell handover. Subsequently, the initial candidate frequency band of each card for which a DSDA mode can be formed is measured, a first candidate frequency band meeting the preset condition (i.e., a quality requirement) is determined from the initial candidate frequency band of each card, the target DSDA combination including the target frequency band of each card is determined from the first candidate frequency bands of the first card and the second card, and the measurement report is reported to a network device, so that the network device indicates the terminal device to switch the first card and the second card to the corresponding target frequency bands respectively, thereby further ensuring the quality of the frequency bands of the cells on which the first card and the second card camp after the cell handover. In summary, according to the method, the DSDA mode can continue to be formed between the frequency bands on which the first card and the second card camp after the cell handover to keep a connected state, thereby avoiding affecting the normal execution of a service on each card. In addition, the quality of the frequency bands on which the first card and the second card camp after the cell handover is better than the quality of frequency bands on which the first card and the second card previously camp, so that the signal quality is improved, thereby improving user experience in general.

In some embodiments, before the determining whether a dual sim dual active DSDA mode supported by the terminal device can be formed between a neighboring cell frequency band of the first card and a neighboring cell frequency band of the second card, the method 600 further includes:

The terminal device determines that a priority of a service currently performed by the first card is the same as a priority of a service currently performed by the second card.

For example, the services currently performed by the first card and the second card are both data services.

If the priorities of the services currently performed by the first card and the second card are different, for example, one card performs a call service, the other card performs a data service, and a priority of the call service is higher than a priority of the data service, if it is to preferentially consider whether the DSDA mode can be formed between the frequency bands of the cells on which the first card and the second card camp after the cell handover and then consider a quality requirement, for the card performing a call service, the quality of the eventually determined target frequency band may not rank at the top among the quality of all neighboring cell frequency bands. Therefore, the performance of the card performing the call service may fail to reach the optimum, affecting user experience to some extent. Therefore, when the priority of the service currently performed by the first card is the same as the priority of the service currently performed by the second card, it is first determined whether the DSDA mode can be formed between the frequency bands of the cells on which the first card and the second card camp after the cell handover and then the quality requirement is considered, so that a case that a priority of a service currently performed by a card is high but the quality of a frequency band on which the card camps after a cell handover is not good can be avoided, thereby avoiding affecting user experience to some extent.

In the foregoing embodiment, the behavior of the terminal device when a DSDA mode can be formed between the neighboring cell frequency band of the first card and the neighboring cell frequency band of the second card is described. In some embodiments, the method 600 further includes:

When a DSDA mode supported by the terminal device cannot be formed between the neighboring cell frequency band of the first card and the neighboring cell frequency band of the second card, the terminal device skips measuring the neighboring cell frequency band of each card.

Because a DSDA mode cannot be formed between the neighboring cell frequency band of the first card and the neighboring cell frequency band of the second card, it means that a DSDA mode cannot be formed between the first card and the second card after a cell handover, so that it cannot be ensured that the dual cards are still in a connected state. In this case, the cell handover fails. Therefore, the terminal device does not measure the neighboring cell frequency band of each card.

In this way, the first card and the second card can still camp on current cells and do not perform a cell handover, to continue to keep the DSDA mode of the dual cards, so that it can be ensured that the first card and the second card continue to continue to remain in a connected state, thereby avoiding affecting the normal execution of a service to some extent, and ensuring good user experience as much as possible. In addition, the terminal device does not measure the neighboring cell frequency band of each card, so that a waste of power caused by ineffective measurement can be further avoided, thereby reducing power consumption.

In some other embodiments, when a DSDA mode supported by the terminal device cannot be formed between the neighboring cell frequency band of the first card and the neighboring cell frequency band of the second card, the terminal device skips measuring the neighboring cell frequency band of each card, but does not report a measurement report.

In this way, because the terminal device does not report measurement results, the network device does not initiate a switching request, and the terminal device does not perform a cell handover. The first card and the second card can still camp on current cells and do not perform a cell handover, to continue to keep the DSDA mode of the dual cards, so that it can be ensured that the first card and the second card continue to remain in a connected state, thereby avoiding affecting the normal execution of a service to some extent, and ensuring good user experience.

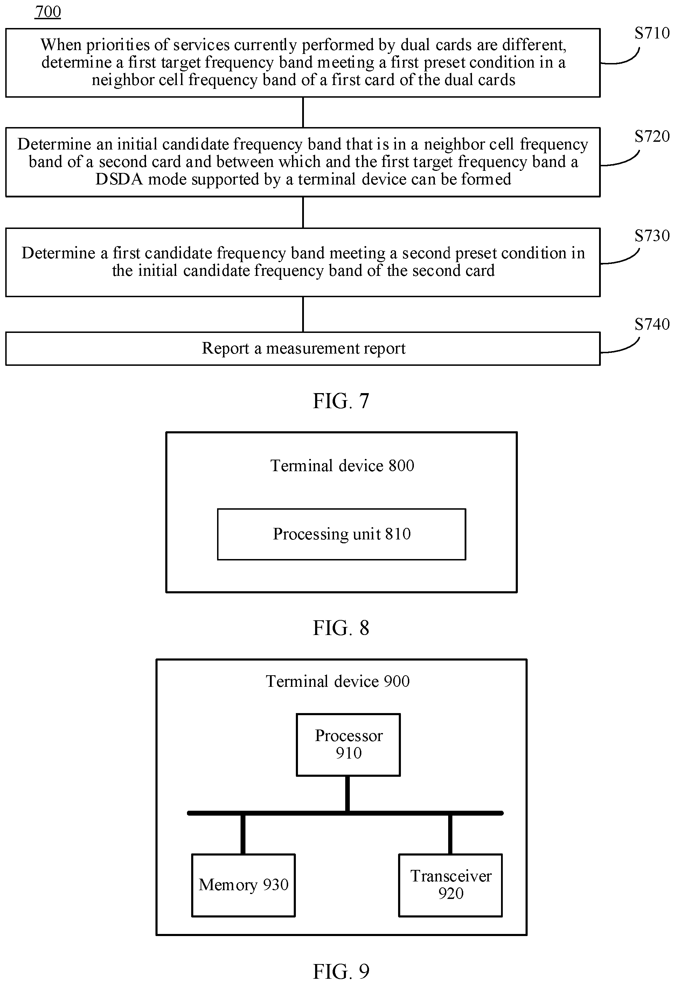

FIG. 7 is a schematic flowchart of a dual-card communication method 700 according to an embodiment of this application. The method 600 may be performed by a terminal device that supports dual-card communication, or may be performed by a chip in the terminal device. This is not limited in the embodiments of this application. For ease of description, the method 700 is described in detail by using a terminal device as an example.

In the method 700, dual cards are both in a connected state. A difference from the method 600 lies in that priorities of services currently performed by the dual cards are different. The first card is a card with a high service priority, and the second card is a card with a low service priority. A first target frequency band with good quality needs to be first determined from a neighboring cell frequency band of the first card with a high service priority, and based on the first target frequency band, a second target frequency band between which and the first target frequency band a DSDA mode is matched from a neighboring cell frequency band of the second card with a service priority, so that the quality of a frequency band on which the first card with a high service priority camps after a cell handover is preferentially ensured, and it can also be ensured that a DSDA mode is formed between frequency bands on which the dual cards camp after the cell handover to continue to keep a connected state, to avoid affecting the normal execution of a service on each card, thereby better improving user experience.

In addition, the method 700 may be analogous to the method 400, and the first card may be analogous to the card 1 in the method 400, and the second card may be analogous to the card 2 in the method 400.

S710: When priorities of services currently performed by the dual cards are different, the terminal device determines a first target frequency band meeting a first preset condition in a neighboring cell frequency band of a first card of the dual cards, where the priority of the service currently performed by the first card is higher than the priority of the service currently performed by a second card of the dual cards, and the first preset condition includes: quality of a neighboring cell of the first card meets an event configured for a cell handover, and one neighboring cell corresponds to one frequency band.

Before the step, the terminal device determines whether priorities of services currently performed by the dual cards are the same, and when priorities of services currently performed by dual cards are different, determines a first target frequency band meeting the first preset condition in a neighboring cell frequency band of the first card with a high service priority of the dual cards, to find a frequency band with good quality.

When a frequency band meeting the first preset condition in the neighboring cell frequency band of the first card includes a plurality of frequency bands, a frequency band with the best quality of the plurality of frequency bands may be determined as the first target frequency band.

In the first preset condition, for example, the quality of the neighboring cell may be represented by at least one of RSRP and RSRQ of a frequency band corresponding to the neighboring cell. In addition, the event configured for a cell handover may be any following event: an A3 event, an A4 event, a B1 event, or a B2 event. For detailed descriptions of the events, refer to the related descriptions above, and details are not described again.

In some embodiments, the service currently performed by the first card is a call service, and the service currently performed by the second card is a data service.

In some other embodiments, the service currently performed by the first card is a call service performed in a foreground, and the service currently performed by the second card is a call service performed in a background.

S720: The terminal device determines an initial candidate frequency band that is in a neighboring cell frequency band of the second card and between which and the first target frequency band a dual sim dual active DSDA mode supported by the terminal device can be formed. The initial candidate frequency band of the second card includes one or more frequency bands.

For detailed descriptions of S720, refer to the related descriptions of S450, and it is only necessary to replace the card 1 and the card 2 in S450 with the first card and the second card here respectively. Details are not described again.

S730: The terminal device determines a first candidate frequency band meeting a second preset condition in the initial candidate frequency band of the second card, where the second preset condition includes: quality of a neighboring cell of the second card meets an event configured for a cell handover, and one neighboring cell corresponds to one frequency band. The first candidate frequency band of the second card includes one or more frequency bands.

In the second preset condition, for example, the quality of the neighboring cell may be represented by at least one of RSRP and RSRQ of a frequency band corresponding to the neighboring cell. In addition, the event configured for a cell handover may be any following event: an A3 event, an A4 event, a B1 event, or a B2 event. For detailed descriptions of the events, refer to the related descriptions above, and details are not described again.

It should be understood that the frequency bands in the first candidate frequency band are some or all frequency bands in the initial candidate frequency band. If all frequency bands in the initial candidate frequency band meet the preset condition, the frequency bands in the first candidate frequency band are all frequency bands in the initial candidate frequency band. If some frequency bands in the initial candidate frequency band meet the preset condition, the first candidate frequency bands are some frequency bands in the initial candidate frequency band.

S740: The terminal device reports a measurement report, where the measurement report is configured for indicating quality of the first target frequency band and quality of a second target frequency band determined based on the first candidate frequency band.

Correspondingly, the network device may send a switching request to the terminal device based on the measurement report, to indicate the terminal device to switch each card to a corresponding target frequency band. After a cell handover is completed, the first card camps on the first target frequency band, the second card camps on the second target frequency band, and a DSDA mode is formed between the dual cards to continue to keep a connected state. In this way, the cell handover is successfully completed, thereby ensuring user experience.

For example, the measurement report may include a first measurement report for the first card and a second measurement report for the second card. The first measurement report is configured for indicating quality of the first target frequency band of the first card, and the second measurement report is configured for indicating quality of the second target frequency band of the second card. In this way, the terminal device may report the first measurement report and the second measurement report to the network device respectively.

It should be understood that before the terminal device reports the measurement report, the method 700 further includes: determining the second target frequency band from the first candidate frequency band. The second target frequency band is a frequency band in the first candidate frequency band, and may be any frequency band, or may be a frequency band determined according to a rule. This is not limited herein, and details are described subsequently.

In the dual-card communication method provided in the embodiments of this application, when the dual cards are both in a connected state, and when the priorities of the services currently performed by the dual cards are different, the terminal device first determines a first target frequency band meeting a first preset condition (a quality requirement) from the neighboring cell frequency band of the first card with a high service priority to preferentially ensure the quality of the first card with a high service priority, next, determines an initial candidate frequency band between which and the first target frequency band a DSDA mode can be formed from the neighboring cell frequency band of the second card with a low service priority, determines a first candidate frequency band meeting a second preset condition (a quality requirement) from the initial candidate frequency band, and determines the second target frequency band from the first candidate frequency band, thereby further ensuring that a DSDA mode can still be formed between frequency bands on which the dual cards camp after a cell handover to keep a connected state, and improving user experience in general. In summary, according to the method, the quality of the first card with the high service priority is preferentially ensured, and a DSDAmode can continue to be formed between the frequency bands on which the dual cards camp after the cell handover to keep a connected state, thereby avoiding affecting the normal execution of a service on each card. In addition, the quality of the frequency bands on which the dual cards camp after the cell handover is better than the quality of frequency bands on which the dual cards previously camp, so that the signal quality is improved, thereby better improving user experience in general.

In some embodiments, the first candidate frequency band includes a plurality of frequency bands; and before the reporting a measurement report, the method 700 further includes: The terminal device determines a frequency band with the highest priority in the first candidate frequency band as the second target frequency band.

In this way, after the terminal device performs a cell handover on the dual cards, the DSDA mode formed between the first target frequency band and the second target frequency band on which the dual cards camp respectively is an optimal mode set on the terminal device, thereby improving the performance of a dual-card mode.

In an example, a DSDA combination of a DSDA mode formed between the second target frequency band and the first target frequency band is a combination with the best dual-card capability of DSDA combinations formed between frequency bands in the first candidate frequency band and the first target frequency band.

In other words, the terminal device determines a frequency band included in the first candidate frequency band in the combination with the best dual-card capability of DSDA combinations formed between frequency bands in the first candidate frequency band and the first target frequency band as the second target frequency band. In this embodiment, a priority of a frequency band in the first candidate frequency band is defined from a dual-card mode capability. When a dual-card mode capability formed between a frequency band in the first candidate frequency band and the first target frequency band is better, a priority of the frequency band is higher. Conversely, when a dual-card mode capability formed between a frequency band in the first candidate frequency band and the first target frequency band is poorer, a priority of the frequency band is lower. A descending order in terms of the dual-card mode capability is: DSDA transmission exclusive > DSDA transmission sharing > DR-DSDS > DSDS.

The first candidate frequency band includes three frequency bands. The three frequency bands and the first target frequency band may form three DSDA combinations. A DSDA combination 1 is a DSDA transmission exclusive mode, and a DSDA combination 2 and a DSDA combination 3 are DSDA transmission sharing modes. In this case, the DSDA combination 1 with the DSDA mode as the DSDA transmission exclusive mode is a combination with the best dual-card capability of the three DSDA combinations. The frequency band in the first candidate frequency band included in the DSDA combination 1 is the second target frequency band.

In the dual-card communication method provided in the embodiments of this application, the terminal device determines a frequency band included in the first candidate frequency band in the combination with the best dual-card capability of the DSDA combinations formed between the frequency bands in the first candidate frequency band and the first target frequency band as the second target frequency band, so that after a cell handover is performed on the dual cards, the DSDA mode formed between the first target frequency band and the second target frequency band on which the dual cards camp respectively is a dual-card mode with the optimal performance, thereby providing the best user experience.

In another example, the second target frequency band is a frequency band with the best quality in the first candidate frequency band.

In other words, the terminal device uses the frequency band with the best capability in the first candidate frequency band as the second target frequency band. The quality of the frequency band may be represented by at least one of an RSRP value and an RSRQ value. In this embodiment, a priority of a frequency band in the first candidate frequency band is defined from the quality of the frequency band. When the quality of a frequency band in the first candidate frequency band is better, a priority of the frequency band is higher. Conversely, when the quality of a frequency band in the first candidate frequency band is poorer, a priority of the frequency band is lower.

It should be noted that the priority of the frequency band in the first candidate frequency band defined above may be separately used, or may be used in combination. For detailed descriptions, refer to the related descriptions of S481 above, and details are not described again.

The dual-card communication method provided in the embodiments of this application is described above in detail with reference to FIG. 1 to FIG. 7. A terminal device provided in the embodiments of this application is described below in detail with reference to FIG. 8 and FIG. 9.

FIG. 8 is a schematic block diagram of a terminal device 800 according to an embodiment of this application. The terminal device 800 includes a processing unit 810.

In a possible implementation, the terminal device 800 is configured to perform procedures and steps corresponding to the terminal device in the foregoing method 600. A first card and a second card of the terminal device 800 are both in a connected state.

The processing unit 810 is configured to perform the following steps:
determining whether a dual sim dual active DSDA mode supported by the terminal device can be formed between a neighboring cell frequency band of the first card and a neighboring cell frequency band of the second card;
measuring an initial candidate frequency band of each card of the first card and the second card between which the DSDA mode can be formed;
determining a first candidate frequency band meeting a preset condition in the initial candidate frequency band of each card, where the preset condition includes: quality of a neighboring cell of each card meets an event configured for a cell handover, and one neighboring cell corresponds to one frequency band;
determining a target DSDA combination based on at least one DSDA combination based on a DSDA mode formed between the first candidate frequency band of the first card and the first candidate frequency band of the second card, where the target DSDA combination includes a target frequency band in the first candidate frequency band of the first card and a target frequency band in the first candidate frequency band of the second card; and
reporting a measurement report, where the measurement report is configured for indicating quality of the target frequency band of the first card and quality of the target frequency band of the second card.

It should be understood that the processing unit 810 may be configured to perform the steps performed by the terminal device in the method 600. For detailed descriptions, refer to the related descriptions above, and details are not described again.

In another possible implementation, the terminal device 800 is configured to perform procedures and steps corresponding to the terminal device in the foregoing method 700. The dual cards of the terminal device 800 are both in a connected state.

The processing unit 810 is configured to perform the following steps:
when priorities of services currently performed by the dual cards are different, determining a first target frequency band meeting a first preset condition in a neighboring cell frequency band of the first card of the dual cards, where the priority of the service currently performed by the first card is higher than the priority of the service currently performed by the second card of the dual cards, and the first preset condition includes: quality of a neighboring cell of the first card meets an event configured for a cell handover, and one neighboring cell corresponds to one frequency band;
determining an initial candidate frequency band that is in a neighboring cell frequency band of the second card and between which and the first target frequency band a dual sim dual active DSDA mode supported by the terminal device can be formed;
determining a first candidate frequency band meeting a second preset condition in the initial candidate frequency band of the second card, where the second preset condition includes: quality of a neighboring cell of the second card meets an event configured for a cell handover, and one neighboring cell corresponds to one frequency band; and
reporting a measurement report, where the measurement report is configured for indicating quality of the first target frequency band and quality of a second target frequency band determined based on the first candidate frequency band.

It should be understood that the processing unit 810 may be configured to perform the steps performed by the terminal device in the method 700. For detailed descriptions, refer to the related descriptions above, and details are not described again.

It should be understood that the terminal device 800 is implemented in the form of functional units. The term "unit" herein may refer to an application-specific integrated circuit (application specific integrated circuit, ASIC), an electronic circuit, a processor (for example, a shared processor, a dedicated processor, or a group processor) configured to execute one or more software or firmware programs, a memory, a combined logic circuit, and/or another suitable component that supports the described functions.

In this embodiment of this application, the terminal device in FIG. 8 may alternatively be a chip or a chip system, for example, a system on chip (system on chip, SoC).

FIG. 9 is a schematic structural diagram of a terminal device 900 according to an embodiment of this application. The terminal device 900 is configured to perform the steps and/or procedures corresponding to the foregoing method embodiments.

The terminal device 900 includes a processor 910, a transceiver 920, and a memory 930. The processor 910, the transceiver 920, and the memory 930 communicate with each other through an internal connection path. The processor 910 may implement the functions of the processor 910 in various possible implementations of the terminal device 900. The memory 930 is configured to store instructions, and the processor 910 is configured to execute the instructions stored in the memory 930. Alternatively, the processor 910 may invoke these stored instructions to implement the functions of the processor 910 in the terminal device 900.

Optionally, the memory 930 may include a read-only memory (ROM) and a random access memory (RAM), and provide instructions and data to the processor. A part of the memory may further include a non-volatile random access memory. For example, the memory may further store information about a device type. The processor 910 may be configured to execute the instructions stored in the memory, and when the processor 910 executes the instructions stored in the memory, the processor 910 is configured to perform the steps and/or procedures of the foregoing method embodiments corresponding to the terminal device.

In a possible implementation, the terminal device 900 is configured to perform procedures and steps corresponding to the terminal device in the foregoing method 600. A first card and a second card of the terminal device 900 are both in a connected state.

The processor 910 is configured to perform the following steps:
determining whether a dual sim dual active DSDA mode supported by the terminal device can be formed between a neighboring cell frequency band of the first card and a neighboring cell frequency band of the second card;
measuring an initial candidate frequency band of each card of the first card and the second card between which the DSDA mode can be formed;
determining a first candidate frequency band meeting a preset condition in the initial candidate frequency band of each card, where the preset condition includes: quality of a neighboring cell of each card meets an event configured for a cell handover, and one neighboring cell corresponds to one frequency band;
determining a target DSDA combination based on at least one DSDA combination based on a DSDA mode formed between the first candidate frequency band of the first card and the first candidate frequency band of the second card, where the target DSDA combination includes a target frequency band in the first candidate frequency band of the first card and a target frequency band in the first candidate frequency band of the second card; and
reporting a measurement report, where the measurement report is configured for indicating quality of the target frequency band of the first card and quality of the target frequency band of the second card.

In another possible implementation, the terminal device 900 is configured to perform procedures and steps corresponding to the terminal device in the foregoing method 700. The dual cards of the terminal device 900 are both in a connected state.

The processor 910 is configured to perform the following steps:
when priorities of services currently performed by the dual cards are different, determining a first target frequency band meeting a first preset condition in a neighboring cell frequency band of the first card of the dual cards, where the priority of the service currently performed by the first card is higher than the priority of the service currently performed by the second card of the dual cards, and the first preset condition includes: quality of a neighboring cell of the first card meets an event configured for a cell handover, and one neighboring cell corresponds to one frequency band;
determining an initial candidate frequency band that is in a neighboring cell frequency band of the second card and between which and the first target frequency band a dual sim dual active DSDA mode supported by the terminal device can be formed;
determining a first candidate frequency band meeting a second preset condition in the initial candidate frequency band of the second card, where the second preset condition includes: quality of a neighboring cell of the second card meets an event configured for a cell handover, and one neighboring cell corresponds to one frequency band; and
reporting a measurement report, where the measurement report is configured for indicating quality of the first target frequency band and quality of a second target frequency band determined based on the first candidate frequency band.

It should be understood that specific processes in which the components perform the corresponding steps in the foregoing methods have been described in detail in the foregoing method embodiments. For brevity, details are not described herein again.

It should be understood that, in the embodiments of this application, the processor of the apparatus may be a central processing unit (central processing unit, CPU), and the processor may alternatively be another general-purpose processor, a digital signal processor (DSP), an application-specific integrated circuit (ASIC), a field programmable gate array (FPGA) or another programmable logic device, a discrete gate or transistor logic device, a discrete hardware component, or the like. The general-purpose processor may be a microprocessor, or the processor may be any conventional processor or the like.

During implementation, the steps of the foregoing method may be completed through an integrated logic circuit of hardware or an instruction in the form of software in the processor. The steps of the methods disclosed with reference to the embodiments of this application may be directly implemented by a hardware processor, or may be implemented by a combination of hardware and a software unit in a processor. The software unit may be stored in a storage medium that is mature in the art, such as a RAM, a flash memory, a read-only memory (ROM), a programmable ROM, an electrically erasable programmable memory, or a register. The storage medium is located in the memory. The processor executes the instructions in the memory and completes the steps of the foregoing methods in combination with hardware thereof. To avoid repetition, details are not described herein again.

Embodiments of this application provide a computer program product. The computer program product, when run on a terminal device, causes the terminal device to perform the technical solutions in the foregoing embodiments. Their implementation principles and technical effects are similar those in the method-related embodiments, and details are not described herein again.

Embodiments of this application provide a readable storage medium. The readable storage medium stores instructions. The instructions, when run on a terminal device, cause the terminal device to perform the technical solutions in the foregoing embodiments. The implementation principles and technical effects thereof are similar, and details are not described herein again.

Embodiments of this application provide a chip. The chip is configured to execute instructions. The chip, when run, performs the technical solutions in the foregoing embodiments. The implementation principles and technical effects thereof are similar, and details are not described herein again.

All or some of the foregoing embodiments may be implemented by using software, hardware, firmware, or any combination thereof. When the software is used for implementation, implementation may be entirely or partially performed in the form of a computer program product. The computer program product includes one or more computer instructions. When the computer program instructions are loaded and executed on a computer, all or some of the procedures or functions according to the embodiments of this application are generated. The computer may be a general-purpose computer, a dedicated computer, a computer network, or another programmable apparatus. The computer instructions may be stored in a computer-readable storage medium or transmitted from one computer-readable storage medium to another computer-readable storage medium. For example, the computer instructions may be transmitted from one website, computer, server or data center to another website, computer, server or data center in a wired (for example, a coaxial cable, an optical fiber or a digital subscriber line (digital subscriber line, DSL)) or wireless (for example, infrared, wireless or microwave) manner. The computer-readable storage medium may be any usable medium that can be accessed by the computer, or a data storage device, such as a server or a data center in which one or more usable mediums are integrated. The available medium may be a magnetic medium (such as a floppy disk, a hard disk, or a magnetic tape), an optical medium (such as a digital video disc (digital video disc, DVD)), a semiconductor medium (such as a solid-state drive (solid state disk, SSD)) or the like.

It should be understood that the "embodiments" mentioned throughout the specification means that particular features, structures, or characteristics related to the embodiments are included in at least one embodiment of this application. Therefore, the embodiments throughout the specification may not necessarily refer to the same embodiment. In addition, the particular features, structures, or properties may be combined in one or more embodiments in any proper manner. It should be understood that sequence numbers of the foregoing processes do not mean execution sequences in various embodiments of this application. The execution sequences of the processes should be determined according to functions and internal logic of the processes, and should not be construed as any limitation on the implementation processes of the embodiments of this application.

It should be further understood that in this application, "when" and "if" both mean that the UE or the base station performs corresponding processing in an objective situation, which is not limited in time, and does not require an action that needs to be determined when the UE or the base station implements the processing, and does not mean that there is another limitation.

A person of ordinary skill in the art should understand that "first", "second", and various numbers in this application are merely used for differentiation for ease of description, are not construed as a limitation on the scope of the embodiments of this application, and are also used for representing a sequence.

In this application, an element represented in a singular form is intended to represent "one or more", rather than "one and only one", unless otherwise specified. In this application, unless otherwise specified, "at least one" is intended to represent "one or more", and "a plurality of" is intended to represent "two or more".

The term "and/or" herein merely describes an association relationship for describing associated objects and represents that three relationships may exist. For example, A and/or B may represent the following three cases: Only A exists, both A and B exist, and only B exists, where A may be in a singular or plural form, and B may be in a singular or plural form.

The term "at least one of" in this specification represents all or any combination of the listed items. For example, "at least one of A, B, and C" may represent the following six cases: Only A exists, only B exists, only C exists, both A and B exist, both B and C exist, and both A, B, and C exist, where A may be in a singular or plural form, B may be in a singular or plural form, and C may be in a singular or plural form.

A person of ordinary skill in the art may be aware that, in combination with the examples described in the embodiments disclosed in this specification, units and algorithm steps may be implemented by electronic hardware or a combination of computer software and electronic hardware. Whether the functions are performed by hardware or software depends on particular applications and design constraints of the technical solutions. A person skilled in the art may use different methods to implement the described functions for each particular application, but it should not be considered that the implementation goes beyond the scope of this application.

A person skilled in the art can clearly understand that for convenience and conciseness of description, the specific working processes of the above-described system, apparatus, and unit can be understood with reference to the corresponding processes in the above-described method embodiments, and details are not repeated herein again.

In the several embodiments provided in this application, it should be understood that the disclosed system, apparatus, and method may be implemented in other manners. For example, the above-described apparatus embodiment is only exemplary. For example, the division of the units is only a logical function division and may be other divisions during actual implementation. For example, a plurality of units or components may be combined or integrated into another system, or some features may be ignored or not performed. In addition, the displayed or discussed mutual couplings or direct couplings or communication connections may be implemented through some interfaces. The indirect couplings or communication connections between the apparatuses or units may be implemented in electronic, mechanical, or other forms.

The units described as separate components may or may not be physically separated, and the components displayed as units may or may not be physical units, and may be located in one place or may be distributed over a plurality of network units. Some or all of the units may be selected based on actual requirements to achieve the objectives of the solutions of the embodiments.

In addition, functional units in the embodiments of this application may be integrated into one processing unit, or each of the units may exist alone physically, or two or more units may be integrated into one unit.

When the functions are implemented in the form of a software functional unit and sold or used as an independent product, the functions may be stored in a computer readable storage medium. Based on such an understanding, the technical solutions of the embodiments of this application essentially, or the part contributing to the related technology, or some of the technical solutions may be implemented in the form of a software product. The computer software product is stored in a storage medium and includes several instructions for instructing a computer device (which may be a personal computer, a server, a network device, or the like) to perform all or some of the steps of the methods described in the embodiments of this application. The foregoing storage medium includes: any medium that can store program code, such as a USB flash drive, a removable hard disk, a read-only memory (ROM), a random access memory (RAM), a magnetic disk, or a compact disc.

For same or similar parts in the embodiments of this application, refer to these embodiments. In the embodiments of this application and the implementations/implementation methods in the embodiments, unless otherwise specified or in logical conflicts, terms and/or descriptions between different embodiments and implementations/implementation methods in the embodiments have consistency and may be mutually referenced. Technical features in different embodiments and implementations/implementation methods in the embodiments may be combined according to internal logical relationships thereof to form a new embodiment, implementation, implementation method. The foregoing implementations of this application do not constitute a limitation on the protection scope of this application.

The foregoing descriptions are merely specific implementations of this application, but are not intended to limit the protection scope of this application. Any variation or replacement readily figured out by a person skilled in the art within the technical scope disclosed in this application shall fall within the protection scope of this application. Therefore, the protection scope of this application shall be used as protection scope of the claims. In summary, the foregoing descriptions are merely preferred embodiments of the technical solutions of this application, but are not intended to limit the protection scope of this application. Any modification, equivalent replacement, or improvement made within the spirit and principle of this application shall fall within the protection scope of this application.

## Claims

1. A dual-card communication method, applied to a terminal device, a first card and a second card of the terminal device being both in a connected state, and comprising:
determining whether a dual sim dual active DSDA mode supported by the terminal device can be formed between a neighboring cell frequency band of the first card and a neighboring cell frequency band of the second card;
measuring an initial candidate frequency band of each card of the first card and the second card between which the DSDA mode can be formed;
determining a first candidate frequency band meeting a preset condition in the initial candidate frequency band of each card, wherein the preset condition comprises: quality of a neighboring cell of each card meets an event configured for a cell handover, and one neighboring cell corresponds to one frequency band;
determining a target DSDA combination based on at least one DSDA combination based on a DSDA mode formed between the first candidate frequency band of the first card and the first candidate frequency band of the second card, wherein the target DSDA combination comprises a target frequency band in the first candidate frequency band of the first card and a target frequency band in the first candidate frequency band of the second card; and
reporting a measurement report, wherein the measurement report is configured for indicating quality of the target frequency band of the first card and quality of the target frequency band of the second card.

2. The method according to claim 1, wherein the at least one DSDA combination comprises a plurality of DSDA combinations; and the determining a target DSDA combination based on at least one DSDA combination based on a DSDA mode formed between the first candidate frequency band of the first card and the first candidate frequency band of the second card comprises:
determining a DSDA combination with the highest priority of the plurality of DSDA combinations as the target DSDA combination.

3. The method according to claim 2, wherein the target DSDA combination is a combination with the best dual-card mode capability of the plurality of DSDA combinations.

4. The method according to any one of claims 1 to 3, wherein the method further comprises:
when a DSDA mode supported by the terminal device cannot be formed between a neighboring cell frequency band of the first card and a neighboring cell frequency band of the second card, skipping measuring the neighboring cell frequency band of each card.

5. The method according to any one of claims 1 to 4, wherein before the determining whether a dual sim dual active DSDA mode supported by the terminal device can be formed between a neighboring cell frequency band of the first card and a neighboring cell frequency band of the second card, the method further comprises:
determining that a priority of a service currently performed by the first card is the same as a priority of a service currently performed by the second card.

6. The method according to claim 5, wherein the services currently performed by the first card and the second card are both data services.

7. A dual-card communication method, applied to a terminal device, dual cards of the terminal device being both in a connected state, and comprising:
when priorities of services currently performed by the dual cards are different, determining a first target frequency band meeting a first preset condition in a neighboring cell frequency band of a first card of the dual cards, wherein the priority of the service currently performed by the first card is higher than the priority of the service currently performed by a second card of the dual cards, and the first preset condition comprises: quality of a neighboring cell of the first card meets an event configured for a cell handover, and one neighboring cell corresponds to one frequency band;
determining an initial candidate frequency band that is in a neighboring cell frequency band of the second card and between which and the first target frequency band a dual sim dual active DSDA mode supported by the terminal device can be formed;
determining a first candidate frequency band meeting a second preset condition in the initial candidate frequency band of the second card, wherein the second preset condition comprises: quality of a neighboring cell of the second card meets an event configured for a cell handover, and one neighboring cell corresponds to one frequency band; and
reporting a measurement report, wherein the measurement report is configured for indicating quality of the first target frequency band and quality of a second target frequency band determined based on the first candidate frequency band.

8. The method according to claim 7, wherein the first candidate frequency band comprises a plurality of frequency bands; and before the reporting a measurement report, the method further comprises:
determining a frequency band with the highest priority in the first candidate frequency band as the second target frequency band.

9. The method according to claim 8, wherein a DSDA combination of a DSDA mode formed between the second target frequency band and the first target frequency band is a combination with the best dual-card capability of DSDA combinations formed between frequency bands in the first candidate frequency band and the first target frequency band.

10. The method according to any one of claims 7 to 9, wherein the service currently performed by the first card is a call service, and the service currently performed by the second card is a data service; or
the service currently performed by the first card is a call service performed in a foreground, and the service currently performed by the second card is a call service performed in a background.

11. A terminal device, comprising:
a memory, configured to store computer instructions; and
a processor, configured to invoke the computer instructions stored in the memory, to perform the method according to any one of claims 1 to 6, or to perform the method according to any one of claims 7 to 10.

12. A computer storage medium, configured to store computer instructions, wherein the computer instructions are configured for implementing the method according to any one of claims 1 to 6, or the computer instructions are configured for implementing the method according to any one of claims 7 to 10.

13. A computer program product, comprising computer instructions, wherein the computer instructions are configured for implementing the method according to any one of claims 1 to 6, or the computer instructions are configured for implementing the method according to any one of claims 7 to 10.

14. A chip, wherein the chip comprises:
a memory, configured to store instructions; and
a processor, configured to invoke and run the instructions from the memory, to cause a communication device installed with the chip system to perform the method according to any one of claims 1 to 6, or to cause a communication device installed with the chip system to perform the method according to any one of claims 7 to 10.
